# EUROPEAN PATENT SPECIFICATION

(11) **EP 3 300 402 B1**
(45) Date of publication and mention of the grant of the patent: **13.11.2019**
(21) Application number: 15895891.8
(22) Date of filing: 23.06.2015
(51) Int. Cl.: H04W 12/02, H04W 12/04, H04W 12/08, H04W 74/08, H04W 74/00, H04W 8/24

(54) **UNLICENSED TRANSMISSION METHOD AND CORRESPONDING USER EQUIPMENT**
VERFAHREN ZUR UNLIZENZIERTEN ÜBERTRAGUNG UND ENTSPRECHENDES BENUTZERGERÄT
PROCÉDÉ D'ÉMISSION SANS LICENCE ET ÉQUIPEMENT D'UTILISATEUR CORRESPONDENT

(43) Date of publication of application: 28.03.2018
(73) Proprietor: Huawei Technologies Co., Ltd., Longgang Shenzhen, Guangdong 518129 (CN)
(72) Inventor: ZENG, Guangzhu, Shenzhen Guangdong 518129 (CN)
(74) Representative: Körber, Martin Hans
(86) International application number: PCT/CN2015/082031
(87) International publication number: WO 2016/205991

(56) References cited:
- CN-A- 1 947 453
- CN-A- 101 822 076
- CN-A- 102 752 269
- US-A1- 2008 076 392
- US-A1- 2014 254 544

## Description

### TECHNICAL FIELD

Embodiments of the present invention relate to the field of communications technologies, and in particular, to a grant-free transmission method, user equipment, an access network device, and a core network device.

### BACKGROUND

In a Long Term Evolution (LTE) system, when user equipment (UE) needs to transmit uplink data, the user equipment uses an uplink scheduling request (SR) mechanism. The UE sends an uplink scheduling request to a base station, and informs the base station that the UE requires an uplink resource for data transmission. After receiving the scheduling request from the UE, the base station allocates specific resources to the UE. The UE transmits data on the allocated resources.

Development of the Internet of Things has resulted in an increasing quantity of machine type communication (Machine Type Communication, MTC) services. For an MTC service, generally, a data packet is relatively small, and a relatively low transmission delay is required. When a large quantity of MTC services exist, the foregoing scheduling request mechanism not only causes high signaling overheads but also leads to a transmission delay.

To resolve the foregoing problem, a technical solution of uplink grant-free (Grant Free) transmission has been proposed. Grant free means that, in a public land mobile network (Public Land Mobile Network, PLMN), UE does not need to use a scheduling request to request a base station to allocate a resource for data transmission. A grant free user can directly transmit a packet on a contention transmission unit (CTU) in a grant-free transmission mode according to different characteristics, such as transmission delay requirements or transmission reliability requirements, of to-be-transmitted data.

In an existing LTE system, user equipment needs to establish a radio resource control (RRC) connection to a wireless communications network during communication. In addition, a mobility management entity (MME) completes authentication of the user equipment according to user equipment information recorded on a home location register (Home Location Register, HLR). A bearer channel needs to be established between the user equipment, a base station, a serving gateway (Serving Gateway, S-GW), and a public data network (Public Data Network, PDN) gateway (PDN Gateway, P-GW), so as to transmit a service data flow over the established bearer channel. Moreover, a protocol stack context, including a Packet Data Convergence Protocol (Packet Data Convergence Protocol, PDCP) entity, a radio link control (RLC) entity, a Medium Access Control (MAC) entity, a physical layer (PHY) entity, and the like, further needs to be established for the user equipment and a network device. To ensure integrity and security of data transmission, the user equipment performs integrity protection and an encryption and decryption process on the PDCP entity.

In a grant-free (Grant Free, GF) transmission scenario, user equipment may be in an idle state or may be in a connected state. In the connected state, the user equipment and a network device can maintain context resources required for air-interface transmission, that is, PDCP, RLC, MAC, and PHY entities, so as to ensure integrity and security of data transmission. In this case, redundant additional information of a protocol stack results in a decrease in transmission efficiency. In the idle state, the user equipment does not need to establish an RRC connection to a network side, and can directly transmit a packet on a contention transmission unit (CTU) in a grant-free transmission mode. This technical solution is simple and effective, but it does not take data transmission security into consideration.

Therefore, how to implement simple, effective, and secure communication in a grant-free transmission scenario is a problem that urgently needs to be resolved.

### SUMMARY

Embodiments of the present invention provide a grant-free transmission method, user equipment, an access network device, and a core network device, to implement simple, effective, and secure communication in a grant-free transmission scenario.

According to a first aspect, a method for grant-free transmission is provided, including: obtaining, by user equipment, a user equipment identifier and a key that are allocated by a core network device and that are used for grant-free transmission; encrypting and encapsulating, by the user equipment, data by using the key and the user equipment identifier; and transmitting, by the user equipment, the encrypted and encapsulated data to an access network device on a first contention transmission unit (CTU) resource in a grant-free transmission mode.

In a first possible implementation, the obtaining, by user equipment, a user equipment identifier and a key that are allocated by a core network device and that are used for grant-free transmission includes: sending, by the user equipment, a first request message to the core network device by using the access network device, where the first request message is used to indicate that the user equipment supports grant-free transmission and to request the core network device to allocate, to the user equipment, the user equipment identifier and the key that are used for grant-free transmission; and receiving, by the user equipment by using the access network device, a first response message sent by the core network device, where the first response message carries the user equipment identifier and the key.

With reference to the first possible implementation, in a second possible implementation, the transmitting, by the user equipment, the encrypted and encapsulated data to an access network device on a first CTU resource in a grant-free transmission mode includes: selecting, by the user equipment, the first CTU resource from multiple CTU resources, and mapping the encrypted and encapsulated data to the first CTU resource for transmission.

With reference to the second possible implementation, in a third possible implementation, the user equipment selects a second CTU resource from multiple CTU resources, and the sending, by the user equipment, a first request message to the core network device by using the access network device includes: mapping, by the user equipment, the first request message to the second CTU resource to send the first request message to the access network device, so that the access network device sends the first request message to the core network device.

With reference to any one of the foregoing possible implementations, in a fourth possible implementation, before the sending, by the user equipment, a first request message to the core network device by using the access network device, the method further includes: receiving, by the user equipment, a system information block (SIB) message that is broadcast by the access network device, where the SIB message includes a public key generated by the core network device; and encrypting, by the user equipment, the first request message by using the public key, where the sending, by the user equipment, a first request message to the core network device by using the access network device includes: sending, by the user equipment, the encrypted first request message to the core network device by using the access network device.

With reference to the second or the third possible implementations, in a fifth possible implementation, the method according to the first aspect further includes: receiving, by the user equipment, indication information of the multiple CTU resources that is sent by the access network device.

With reference to any one of the foregoing possible implementations, in a sixth possible implementation, the encrypting and encapsulating, by the user equipment, data by using the key and the user equipment identifier includes: encrypting and encapsulating, by the user equipment, the data at a transport adaptation layer of the user equipment by using the key and the user equipment identifier.

According to a second aspect, a method for grant-free transmission is provided, including: receiving, by an access network device, a first request message from user equipment, where the first request message is used to indicate that the user equipment supports grant-free transmission and to request a core network device to allocate, to the user equipment, a user equipment identifier and a key that are used for grant-free transmission; sending, by the access network device, the first request message to the core network device; receiving, by the access network device, a first response message sent by the core network device, where the first response message carries the user equipment identifier and the key; sending, by the access network device, the first response message to the user equipment; receiving on a first contention transmission unit (CTU) resource in a grant-free transmission mode from the user equipment, by the access network device, data encrypted and encapsulated by the user equipment using the key and the user equipment identifier; and sending, by the access network device, the data to the core network device.

In a first possible implementation, the receiving, by an access network device, a first request message from user equipment includes: receiving, by the access network device, the first request message transmitted by the user equipment on a second CTU resource in multiple CTU resources.

With reference to the second aspect or the first possible implementation of the second aspect, in a second possible implementation, the method according to the third aspect further includes: receiving, by the access network device, a public key from the core network device; and broadcasting, by the access network device, the public key in a system information block (SIB) message, where the sending, by the access network device, the first request message to the core network device includes: receiving, by the access network device, the first request message encrypted by the user equipment by using the public key, and sending the encrypted first request message to the core network device; and the receiving, by the access network device, a first response message sent by the core network device includes: receiving, by the access network device, the first response message encrypted by the core network device by using a private key.

According to a third aspect, a user equipment is provided, including: an obtaining module, configured to obtain a user equipment identifier and a key that are allocated by a core network device and that are used for grant-free transmission; an encryption module, configured to encrypt data by using the key; an encapsulation module, configured to encapsulate the data by using the user equipment identifier; and a sending module, configured to transmit the encrypted and encapsulated data to an access network device on a first contention transmission unit (CTU) resource in a grant-free transmission mode.

In a first possible implementation, the obtaining module is configured to send a first request message to the core network device by using the access network device, where the first request message is used to indicate that the user equipment supports grant-free transmission and to request the core network device to allocate, to the user equipment, the user equipment identifier and the key that are used for grant-free transmission; and the obtaining module is configured to receive a first response message sent by the core network device, where the first response message carries the user equipment identifier and the key.

With reference to the first possible implementation of the third aspect, in a second possible implementation, the sending module is configured to select the first CTU resource from multiple CTU resources, and maps the encrypted and encapsulated data to the first CTU resource for transmission.

With reference to the second possible implementation of the third aspect, in a third possible implementation, the sending module is further configured to select a second CTU resource from multiple CTU resources, and map the first request message to the second CTU resource to send the first request message to the access network device.

With reference to any one of the foregoing possible implementations of the third aspect, in a fourth possible implementation, before the user equipment sends the first request message to the core network device by using the access network device, the obtaining module is further configured to receive a system information block (SIB) message that is broadcast by the access network device, where the SIB message includes a public key generated by the core network device; the encryption module is configured to encrypt the first request message by using the public key; and the sending module is configured to send the encrypted first request message to the core network device by using the access network device.

With reference to any one of the second or third possible implementations of the third aspect, in a fifth possible implementation, the obtaining module is further configured to receive indication information of the multiple CTU resources that is sent by the access network device.

With reference to any one of the foregoing possible implementations of the third aspect, in a sixth possible implementation, the encryption module is configured to encrypt the data at a transport adaptation layer of the user equipment by using the key; and the encapsulation module is configured to encapsulate the data at the transport adaptation layer of the user equipment by using the user equipment identifier.

Based on the foregoing technical solutions, user equipment obtains, from a core network device, a user equipment identifier and a key that are specially used for grant-free transmission, encrypts and encapsulates to-be-transmitted data by using the user equipment identifier and the key, and transmits the data on a CTU resource in a grant-free transmission mode. Because redundant additional information of a protocol stack is avoided, simple and effective communication is implemented. Moreover, using a dedicated user identifier and a dedicated key ensures packet transmission security. Therefore, simple, effective, and secure communication is implemented in a grant-free transmission scenario.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic architecture diagram of a communications system to which an embodiment of the present invention is applied;
FIG. 2 is a schematic architecture diagram of a communications system 200 according to another embodiment of the present invention;
FIG. 3 is a schematic diagram of a CTU resource definition according to an embodiment of the present invention;
FIG. 4 is a schematic flowchart of a grant-free transmission method according to an embodiment of the present invention;
FIG. 5 is a schematic flowchart of a grant-free transmission method according to another embodiment of the present invention;
FIG. 6 is a schematic flowchart of a grant-free transmission method according to still another embodiment of the present invention;
FIG. 7 is a schematic flowchart based on a grant-free transmission process according to another embodiment of the present invention;
FIG. 8 is a schematic flowchart based on a grant-free transmission process according to another embodiment of the present invention;
FIG. 9 is a schematic diagram of a signaling flow used for grant-free transmission according to another embodiment of the present invention;
FIG. 10 is a schematic diagram of a protocol stack used for grant-free transmission according to an embodiment of the present invention;
FIG. 11 is a schematic structural diagram of user equipment according to an embodiment of the present invention;
FIG. 12 is a schematic structural diagram of a core network device according to an embodiment of the present invention;
FIG. 13 is a schematic structural diagram of an access network device according to an embodiment of the present invention;
FIG. 14 is a schematic structural diagram of user equipment according to another embodiment of the present invention;
FIG. 15 is a schematic structural diagram of a core network device according to another embodiment of the present invention; and
FIG. 16 is a schematic structural diagram of an access network device according to another embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are a part rather than all of the embodiments of the present invention. The invention is defined in the appended claims.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, and/or a computer. As shown in figures, both an application that runs on a computing device and a computing device may be components. One or more components may reside within a process and/or a thread of execution, and a component may be located on one computer and/or distributed between two or more computers. In addition, these components may be executed from various computer readable media that store various data structures. The components may communicate by using a local and/or remote process and according to, for example, a signal having one or more data packets (for example, data from a component interacting with another component in a local system, a distributed system, and/or across a network such as the Internet interacting with another system by using the signal).

It should be understood that, the technical solutions in the embodiments of the present invention may be applied to various communications systems, for example, a Global System for Mobile Communications ("GSM" for short) system, a Code Division Multiple Access ("CDMA" for short) system, a Wideband Code Division Multiple Access ("WCDMA" for short) system, a Long Term Evolution ("LTE" for short) system, an LTE frequency division duplex ("FDD" for short) system, an LTE time division duplex ("TDD" for short), a Universal Mobile Telecommunications System ("UMTS" for short), and a future 5G communications system.

The present invention describes the embodiments with reference to a terminal device. The terminal device may also be user equipment ("UE" for short), an access terminal, a subscriber unit, a subscriber station, a mobile station, a mobile station, a remote station, a remote terminal, a mobile device, a user terminal, a terminal, a wireless communications device, a user agent, or a user apparatus. The access terminal may be a cellular phone, a cordless phone, a Session Initiation Protocol ("SIP" for short) phone, a wireless local loop "WLL" for short) station, a personal digital assistant ("PDA" for short), a handheld device with a wireless communication function, a computing device, another processing device connected to a wireless modem, an in-vehicle device, a wearable device, a terminal device in a future 5G network, a terminal device in a future evolved PLMN network, or the like.

The present invention describes the embodiments with reference to a network device. The network device may be a device configured to communicate with a terminal device. For example, the network device may be a base transceiver station ("BTS" for short) in a GSM system or in a CDMA system, may be a NodeB (NodeB, "NB" for short) in a WCDMA system, or may be an evolved NodeB ("eNB" or "eNodeB" for short) in an LTE system. Alternatively, the network device may be a relay station, an access point, an in-vehicle device, a wearable device, a core network device in a future 5G network, a network device in a future evolved PLMN network, or the like.

In addition, aspects or features of the present invention may be implemented as a method, an apparatus, or a product that uses standard programming and/or engineering technologies. The term "product" used in this application covers a computer program that can be accessed from any computer readable component, carrier, or medium. For example, the computer readable medium may include but is not limited to: a magnetic storage device (for example, a hard disk, a floppy disk, or magnetic tape), an optical disc (for example, a CD (Compact Disk) or a DVD (Digital Versatile Disk), a smart card, and a flash memory device (for example, an EPROM (Erasable Programmable Read-Only Memor), a card, a stick, or a key drive). In addition, various storage media described in this specification may indicate one or more devices and/or other machine-readable media configured to store information. The term "machine-readable media" may include but is not limited to a radio channel, and various other media that can store, contain, and/or bear an instruction and/or data.

In an existing cellular communications system, such as a GSM system, a WCDMA system, or an LTE system, supported communication is mainly for voice and data communication. Generally, a quantity of connections supported by a conventional base station is limited and is easy to implement.

A next-generation mobile communications system not only supports conventional communication but also supports machine-to-machine ("M2M" for short) communication which is also referred to as machine type communication ("MTC" for short). It is predicted that, in 2020, there will be 50 billion to 100 billion MTC devices connected over a network. This greatly exceeds a current quantity of connections. For M2M, because of its diversified types of services, requirements for networks are greatly different. Roughly, there may exist the following several requirements: (I) reliable transmission, but insensitive to a delay; (II) a low delay, and highly reliable transmission.

A service that requires reliable transmission but is insensitive to a delay is relatively easy to handle. However, for a service that requires a low delay and highly reliable transmission, such as a V2V (English full name: Vehicle to Vehicle) service, it is required that a transmission delay should be low and transmission should be reliable. If transmission is unreliable, retransmission is caused. As a result, the transmission delay is excessively high, and requirements cannot be met.

Existence of a large quantity of connections makes a future wireless communications system differ greatly from an existing communications system. A large quantity of connections need to consume more resources for terminal device access and for scheduling signaling transmission that is related to data transmission by a terminal device.

The following clearly and completely describes the technical solutions in the embodiments of the present invention with reference to the accompanying drawings in the embodiments of the present invention. Apparently, the described embodiments are a part rather than all of the embodiments of the present invention. The invention is defined in the appended claims.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, and/or a computer. As shown in figures, both an application that runs on a computing device and a computing device may be components. One or more components may reside within a process and/or a thread of execution, and a component may be located on one computer and/or distributed between two or more computers. In addition, these components may be executed from various computer readable media that store various data structures. The components may communicate by using a local and/or remote process and according to, for example, a signal having one or more data packets (for example, data from two components interacting with another component in a local system, a distributed system, and/or across a network such as the Internet interacting with another system by using the signal).

It should be understood that, the technical solutions in the embodiments of the present invention may be applied to various communications systems, for example, a Global System for Mobile Communications (Global System of Mobile Communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), and a future 5G communications system.

The present invention describes the embodiments with reference to a terminal device. The terminal device may also be user equipment (User Equipment, "UE" for short), an access terminal, a subscriber unit, a subscriber station, a mobile station, a mobile station, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device with a wireless communication function, a computing device, another processing device connected to a wireless modem, an in-vehicle device, a wearable device, a terminal device in a future 5G network, a terminal device in a future evolved PLMN network, or the like.

The present invention describes the embodiments with reference to a network device. The network device may be a device configured to communicate with a terminal device. For example, the network device may be a base transceiver station (Base Transceiver Station, "BTS" for short) in a GSM system or in CDMA, may be a NodeB (NodeB, "NB" for short) in a WCDMA system, or may be an evolved NodeB (Evolutional Node B, "eNB" or "eNodeB" for short) in an LTE system. Alternatively, the network device may be a relay station, an access point, an in-vehicle device, a wearable device, a network-side device in a future 5G network, a network device in a future evolved PLMN network, or the like.

In addition, aspects or features of the present invention may be implemented as a method, an apparatus, or a product that uses standard programming and/or engineering technologies. The term "product" used in this application covers a computer program that can be accessed from any computer readable component, carrier, or medium. For example, the computer readable medium may include but is not limited to: a magnetic storage device (for example, a hard disk, a floppy disk, or magnetic tape), an optical disc (for example, a CD (Compact Disk, compact disc) or a DVD (Digital Versatile Disk, digital versatile disc)), a smart card, and a flash memory device (for example, an EPROM (Erasable Programmable Read-Only Memory, erasable programmable read only memory), a card, a stick, or a key drive). In addition, various storage media described in this specification may indicate one or more devices and/or other machine-readable media configured to store information. The term "machine-readable media" may include but is not limited to a radio channel, and various other media that can store, contain, and/or bear an instruction and/or data.

In an existing cellular communications system, such as a Global System for Mobile Communications (GSM for short) system, a Wideband Code Division Multiple Access (WCDMA for short) system, or a Long Term Evolution (LTE for short) system, supported communication is mainly for voice and data communication. Generally, a quantity of connections supported by a conventional base station is limited and is easy to implement.

A next-generation mobile communications system not only supports conventional communication but also supports M2M (Machine to Machine) communication which is also referred to as MTC (Machine Type Communication) communication. It is predicted that, by 2020, a quantity of MTC devices connected to networks will be up to 50 billion to 100 billion, a quantity far greater than a quantity of existing connections. For M2M, because of its diversified types of services, requirements for networks are greatly different. Roughly, there may exist the following several requirements: reliable transmission, but insensitive to a delay; and a low delay, and highly reliable transmission. A service that requires reliable transmission but is insensitive to a delay is relatively easy to handle. However, for a service that requires a low delay and highly reliable transmission, such as a V2V (Vehicle to Vehicle) service, it is required that a transmission delay should be low and transmission should be reliable. If transmission is unreliable, retransmission is caused. As a result, the transmission delay is excessively high, and requirements cannot be met.

Existence of a large quantity of connections makes a future wireless communications system differ greatly from an existing communications system. A large quantity of connections need to consume more resources for terminal device access and for scheduling signaling transmission that is related to data transmission by a terminal device.

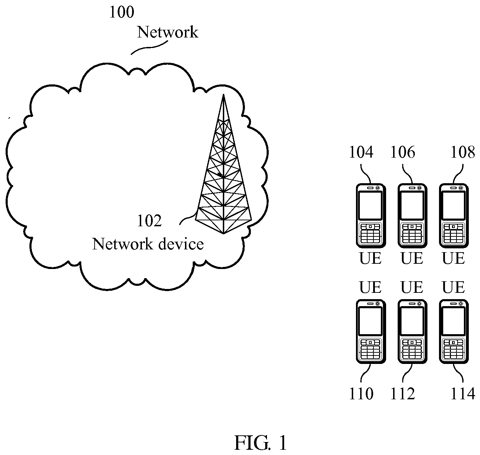

FIG. 1 is a simplified schematic network diagram. In a network 100, there is, for example, a network device 102. The network device 102 is connected to terminal devices 104 to 114 (referred to as UE for short in the figure) in a wireless manner, a wired manner, or another manner.

A network in this patent may be a public land mobile network (PLMN for short), a D2D network, an M2M network, or another network. FIG. 1 is merely a simplified schematic diagram used as an example. A network may further include another network device, which is not shown in FIG. 1.

A terminal device in this patent application may also be user equipment (UE for short), an access terminal, a subscriber unit, a subscriber station, a mobile station, a mobile station, a remote station, a remote terminal, a mobile device, a user terminal, a terminal, a wireless communications device, a user agent, or a user apparatus. The access terminal may be a cellular phone, a cordless phone, a Session Initiation Protocol (SIP for short) phone, a wireless local loop (WLL for short) station, a personal digital assistant (PDA for short), a handheld device with a wireless communication function, a computing device, another processing device connected to a wireless modem, an in-vehicle device, a wearable device, a terminal device in a future 5G network, a terminal device in a future evolved PLMN network, or the like.

A network device in this patent application may be a device configured to communicate with a terminal device. The network device may be a BTS (Base Transceiver Station) in GSM or Code Division Multiple Access (Code Division Multiple Access, CDMA for short), may be an NB (NodeB) in WCDMA, may be a wireless controller in a cloud radio access network (CRAN for short) scenario, or may be an eNB or eNodeB (Evolutional Node B) in LTE. Alternatively, the network device may be an access point, an in-vehicle device, a wearable device, a network-side device in a future 5G network, a network device in a future evolved PLMN network, or the like.

To deal with a large quantity of MTC services in a future network and satisfy low-delay and high-reliability service transmission, this patent proposes a grant-free transmission solution. Grant-free transmission may be represented as grant free in English. Herein, grant-free transmission may be for uplink data transmission. Grant-free transmission may be understood as any one or more of the following meanings, or as a combination of some technical features in more than one of the following meanings.

Grant-free transmission may mean: A network device preallocates multiple transmission resources to a terminal device and informs the terminal device of the multiple transmission resources; when the terminal device has an uplink data transmission requirement, the terminal device selects at least one transmission resource from the multiple transmission resources preallocated by the network device, and sends uplink data by using the selected transmission resource; the network device detects, on one or more of the preallocated multiple transmission resources, the uplink data sent by the terminal device. The detection may be blind detection, may be detection performed according to control information related to the uplink data in the uplink data, or may be detection performed in another manner.

Grant-free transmission may mean: A network device preallocates multiple transmission resources to a terminal device and informs the terminal device of the multiple transmission resources, so that when the terminal device has an uplink data transmission requirement, the terminal device selects at least one transmission resource from the multiple transmission resources preallocated by the network device and sends uplink data by using the selected transmission resource.

Grant-free transmission may mean: Information about preallocated multiple transmission resources is obtained; when there is an uplink data transmission requirement, at least one transmission resource is selected from the multiple transmission resources, and uplink data is sent by using the selected transmission resource. An obtaining manner may be obtaining the information about the preallocated multiple transmission resources from a network device.

Grant-free transmission may mean a method for implementing uplink data transmission of a terminal device without dynamic scheduling performed by a network device. The dynamic scheduling may be a scheduling manner in which the network device indicates, by using signaling, a transmission resource for each uplink data transmission of the terminal device. Optionally, implementing uplink data transmission of a terminal device may be understood as follows: Two or more terminal devices are allowed to perform uplink data transmission on a same time-frequency resource. Optionally, the transmission resource may be a transmission resource in one or more transmission time units following a time point at which the UE receives the signaling. One transmission time unit may be a minimum time unit of one transmission, for example, a TTI (Transmission Time Interval), and its value may be 1 ms. Alternatively, one transmission time unit may be a preset transmission time unit.

Grant-free transmission may mean: A terminal device performs uplink data transmission without being granted by a network device. The grant may mean: A terminal device sends an uplink scheduling request to a network device; after receiving the scheduling request, the network device sends an uplink grant to the terminal device, where the uplink grant indicates an uplink transmission resource allocated to the terminal device.

6. Grant-free transmission may mean a contention-based transmission mode, and may specifically mean that multiple terminals simultaneously perform uplink data transmission on a same preallocated time-frequency resource without being granted by a base station.

The data may include service data or signaling data.

The blind detection may be understood as detection performed, when it is unknown in advance whether data arrives, on data that may arrive. The blind detection may also be understood as detection performed without explicit signaling indication.

The transmission resource may include but is not limited to one or a combination of the following resources:
a time domain resource, such as a radio frame, a subframe, and a symbol;
a frequency domain resource, such as a subcarrier and a resource block;
a space domain resource, such as an transmit antenna and a beam;
a code domain resource, such as a sparse code multiple access (SCMA for short) codebook group, a Low Density Signature (English full name: Low Density Signature, LDS for short) group, and a CDMA code group; or
an uplink pilot resource.

The foregoing transmission resource may be used for transmission performed according to a control mechanism including but not limited to the following:
uplink power control, such as control of an upper limit of uplink transmit power;
modulation and coding scheme setting, such as transport block size setting, code rate setting, or modulation order setting; and
a retransmission mechanism, such as a HARQ mechanism.

A contention transmission unit (CTU for short) may be a basic transmission resource for grant-free transmission. The CTU may be a transmission resource with a combination of a time, frequency, and code domain resource, may be a transmission resource with a combination of a time, frequency, and pilot resource, or may be a transmission resource with a combination of a time, frequency, code domain, and pilot resource.

A CTU access region may be a time-frequency resource region used for grant-free transmission.

A patent application numbered PCT/CN2014/073084 (published as US 2014/254544) and entitled "System and Method for Uplink Grant-Free Transmission Scheme" provides a technical solution of uplink grant-free transmission. The application PCT/CN2014/073084 describes that a radio resource may be divided into various CTUs and that UE is mapped to a CTU. One code group may be allocated to each CTU. The allocated code group may be a group of CDMA codes, or may be an SCMA codebook set, an LDS group, a signature (signature) group, or the like. Each code may be corresponding to one pilot group. A user may select one code and one pilot in a pilot group corresponding to the code, to perform uplink transmission.

When performing grant-free transmission, a terminal device may be in a connected state or may be in an idle state. In the idle state, because context resources on the terminal device and a network device have been released, when the terminal device transmits a packet in a grant-free transmission mode, an encryption and decryption key used in the connected state cannot be used. Therefore, data transmission security cannot be ensured. In addition, in the grant-free transmission mode, redundant additional information of a protocol stack resulting in reduction of transmission efficiency is unwanted. A protocol stack should be as simple and effective as possible. Moreover, a network device in a connected state identifies a user by temporarily allocating a cell radio network temporary identifier (C-RNTI) to a terminal device. However, in the idle state, the CRNTI used in the connected state cannot be used in GF transmission to identify a user. When the terminal device performs GF transmission, if an application-layer IP packet is directly forwarded without any encapsulation, simple and high-efficiency transmission can be implemented. However, in GF transmission, a CTU resource is not allocated by a base station to a terminal device for use alone, but may be contended for by multiple terminal devices simultaneously for use. This easily results in packet masquerading or attack by another terminal device, affecting security.

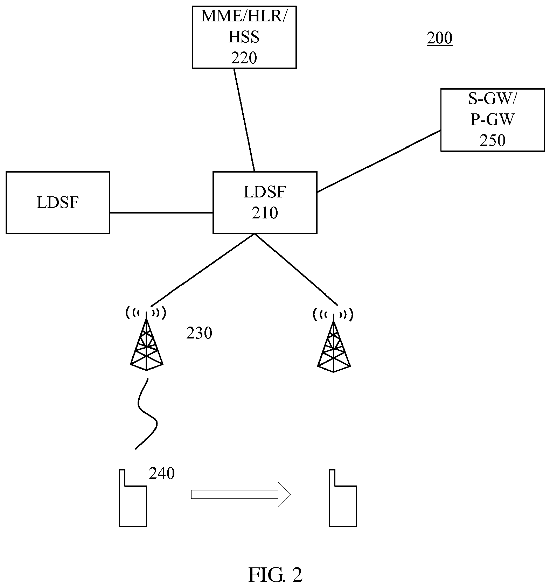

FIG. 2 is a schematic architecture diagram of a communications system 200 according to another embodiment of the present invention.

The system 200 includes a low-delay service function (LDSF) entity 210, a base station 230, an MME/HLR/a home subscriber server (Home Subscriber Server, HSS) 120, a serving gateway (S-GW)/public data network gateway (P-GW) 250, and other network nodes. User equipment 240 communicates with the base station 230 by using an air interface. The LDSF 210 may be a logical function entity, or may be an actual physical device. The LDSF is mainly responsible for two sub-functions of grant-free transmission: a function of performing identity registration for user equipment that supports grant-free transmission, and a function of distributing data (for example, a packet) that is transmitted in a grant-free manner.

For example, when the user equipment performs grant-free transmission, the user equipment requests, to the LDSF by using the base station, to register a grant-free transmission identity, and the LDSF allocates, to the user equipment, a key and a user equipment identifier that are specially used for grant-free transmission. The user equipment encrypts and encapsulates data by using the key and the user equipment identifier, and transmits the data in a grant-free transmission mode. After receiving the data that is transmitted by the user equipment in the grant-free transmission mode, the base station sends the data to the LDSF. The LDSF distributes the data according to a destination address carried in the data.

It should be understood that the LDSF in this embodiment of the present invention may be a logical function entity of an MME or of another core network device. For convenience of description, the following provides descriptions by using an example in which an LDSF is an independent physical device, unless otherwise specified.

It should be understood that the system 200 may include at least one LDSF. Each base station is connected to at least one LDSF. After the base station is started, a transmission channel for a packet that is transmitted in a grant-free manner is maintained between the base station and the LDSF. For example, when the LDSF is a logical function entity of an MME, an interface between the LDSF and a network device is an S1 interface; when the LDSF is an independent physical device, the LDSF and a network device may be connected by using an interface similar to an S1 interface.

It should be further understood that, for the embodiment in FIG. 1, descriptions are provided by using an example in which a network device is a base station. Alternatively, the network device may be another access device (for example, a radio access point).

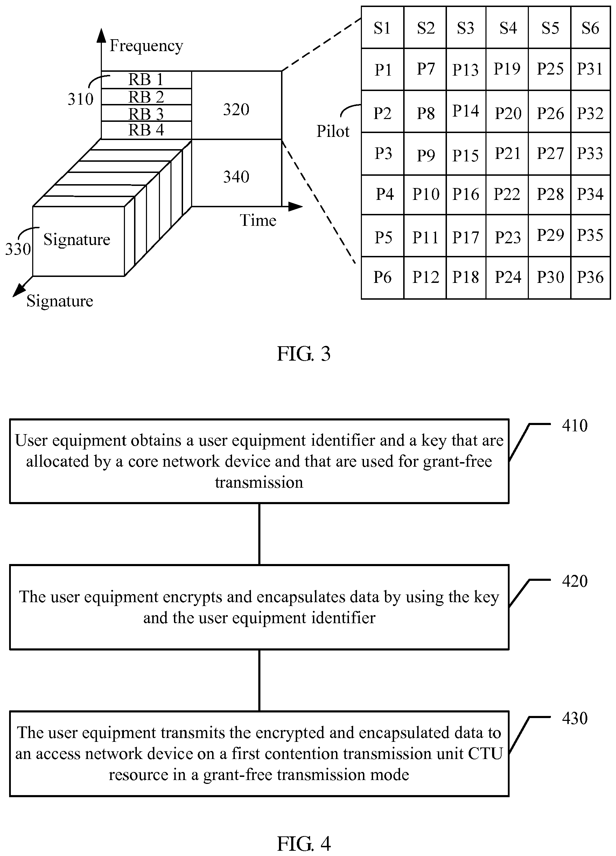

FIG. 3 is a schematic diagram of a CTU resource definition according to an embodiment of the present invention.

FIG. 3 shows four contention access regions (also referred to as CTU access regions) 310, 320, 330, and 340. Available bandwidth is divided into time-frequency regions of the four contention access regions. Each contention access region may occupy a preset quantity of resource blocks (Resource Block). For example, in the embodiment in FIG. 3, the contention access region 310 includes four RBs: an RB 1, an RB 2, an RB 3, and an RB 4. This embodiment of the present invention is not limited thereto. For example, different contention access regions may include different quantities of RBs. In FIG. 3, each contention access region can support 36 UEs contending for 36 CTUs defined in the contention access region. Each CTU is a combination of time, a frequency, a code resource or a signature, and a pilot. The code resource includes a CDMA code, an SCMA (Sparse Code Multiple Access) code, an LDS (Low Density Signature), another signature (signature), or the like. Each contention access region occupies one time-frequency resource region. Each time-frequency resource region supports six signatures (S1 to S6), and each signature is mapped to six pilots, thereby generating a total of 36 pilots (PI to P36). A network device may detect or decode, by using a pilot/signature decorrelator, a signal sent by each UE on a CTU.

When UE enters a coverage area of a source network device, the UE can receive higher layer signaling sent by the network device. The higher layer signaling may carry a CTU access region definition (CTU access region definition), a total quantity of CTUs, a default mapping rule, and the like. Alternatively, the UE may preconfigure a default mapping rule. The UE may determine an appropriate CTU to perform grant-free transmission on the CTU. When different UEs perform grant-free transmission on a same CTU, that is, contend for a same CTU, a collision occurs. The UE may determine, according to an indication from the network device, whether a collision exists. For example, a problem resulting from a collision can be resolved by using an asynchronous HARQ method. However, if a quantity of collisions exceeds a preset threshold, the UE may request, to the network device, to remap data to a CTU. The network device sends information about a remapped-to CTU to the UE, so that the UE performs grant-free transmission on the remapped-to CTU.

It should be understood that, for convenience of description, FIG. 3 shows four contention access regions. This embodiment of the present invention is not limited thereto. More or fewer contention access regions may be defined according to a need.

FIG. 4 is a schematic flowchart of a grant-free transmission method according to an embodiment of the present invention. For example, the method in FIG. 4 may be executed by the user equipment in FIG. 2. An access network device in this embodiment may be the network device in FIG. 2.

410: The user equipment obtains a user equipment identifier and a key that are allocated by a core network device and that are used for grant-free transmission.

420: The user equipment encrypts and encapsulates data by using the key and the user equipment identifier.

430: The user equipment transmits the encrypted and encapsulated data to the access network device on a first contention transmission unit CTU resource in a grant-free transmission mode.

Specifically, the user equipment registers a grant-free transmission identity with the core network device by using the access network device, so that the core network device allocates, to the user equipment, the user equipment identifier and the encryption and decryption key that are specially used for grant-free transmission. The user equipment uses the key to encrypt the data, and uses the user equipment identifier to encapsulate the encrypted data. The user equipment may select a CTU from multiple CTUs to send the encrypted and encapsulated data.

According to this embodiment of the present invention, the core network device may be an independent physical device with an LDSF. Alternatively, in another embodiment, the core network device may be a mobility management entity, and the mobility management entity includes an LDSF.

It should be understood that the user equipment may transmit the data by using at least one contention transmission unit resource. In addition, a sequence of encryption and encapsulation is not limited in this embodiment of the present invention. The data may be first encrypted and then encapsulated with the user equipment identifier, or the data may be first encapsulated with the user equipment identifier and then encrypted.

It should be further understood that the user equipment may be user equipment that supports only grant-free transmission, or may be user equipment in which grant-based transmission and grant-free transmission are compatible. The user equipment may be user equipment in a connected state, or may be user equipment in an idle state. If grant-based transmission and grant-free transmission are compatible in the user equipment, this embodiment of the present invention may be executed if a condition for performing grant-free transmission is met (for example, if a preset condition is met or a switching instruction is received), or this embodiment of the present invention may be executed if the user equipment switches from the connected state to the idle state, or this embodiment of the present invention may be executed regardless of whether the user equipment is in the connected state or the idle state.

According to this embodiment of the present invention, user equipment obtains, from a core network device, a user equipment identifier and a key that are specially used for grant-free transmission, encrypts and encapsulates to-be-transmitted data by using the user equipment identifier and the key, and transmits the data on a CTU resource in a grant-free transmission mode. Because redundant additional information of a protocol stack is avoided, simple and effective communication is implemented. Moreover, using a dedicated user identifier and a dedicated key ensures data transmission security. Therefore, simple, effective, and secure communication is implemented in a grant-free transmission scenario.

In step 410, the user equipment sends a first request message to the core network device by using the access network device. The first request message is used to indicate that the user equipment supports grant-free transmission and to request the core network device to allocate, to the user equipment, the user equipment identifier and the key that are used for grant-free transmission. In addition, the user equipment receives, by using the access network device, a first response message sent by the core network device. The first response message carries the user equipment identifier and the key.

For example, before performing grant-free transmission, the user equipment first sends a first request message to the core network device by using the access network device, to request to register an identity with the core network device. After performing identity authentication and authentication on the user equipment, the core network device allocates, to the user equipment, a unique user equipment identifier and a unique encryption and decryption key that are specially used for grant-free transmission, and sends, to the user equipment by using the access network device, a first response message that carries the user equipment identifier and the key. When performing grant-free transmission, the user equipment encrypts data by using the key, encapsulates the encrypted data by using the user equipment identifier that is specially used for grant-free transmission, and sends the encrypted and encapsulated data to the access network device on a CTU in a grant-free transmission mode. The access network device may perform blind detection on the data that is transmitted in a grant-free manner, and forwards the obtained data to the core network device. After receiving, according to the user equipment identifier, the data that is transmitted in a grant-free manner and that is sent by the user equipment by using the access network device, the core network device decrypts the data and distributes the decrypted data to a destination.

It should be understood that the first request message and the first response message may be newly added dedicated signaling messages, or may be message fields newly added to existing signaling messages.

For example, the first request message may be a/an non-access stratum/attach ((Non-Access Stratum, NAS)/Attach) request message. A difference from a conventional non-access stratum/attach request message lies in that, the non-access request message/attach request message in this embodiment of the present invention may include a register grant-free request (REGISTER_GF_REQ) field. The register grant-free request field is used to indicate that the user equipment supports grant-free transmission and to request the core network device to allocate, to the user equipment, the user equipment identifier and the key that are used for grant-free transmission. Therefore, the core network device that receives the register grant-free request field knows that the user equipment supports a grant-free transmission function, and then allocates, to the user equipment, the user equipment grant-free identifier and the grant-free key that are required for grant-free transmission.

For example, the first response message may be a/an non-access/attach accept (NAS/Attach accept) message. A difference from a conventional non-access stratum/attach accept message lies in that, the non-access accept message/attach accept message may include a register grant-free response (REGISTER_GF_RESP) field. The register grant-free response field carries the user equipment identifier and the key. In this embodiment, the register grant-free request and the register grant-free response are implemented by using existing signaling, thereby reducing signaling overheads.

Alternatively, in another embodiment, the first request message may be a dedicated register grant-free request message, and the first response message may be a dedicated registration response message.

For example, in an idle state, when the user equipment cannot use a non-access stratum request message/an attach request message and a non-access accept message/an attach accept message, the user equipment may perform registration by using a dedicated register grant-free request message and a dedicated registration response message.

In step 430, the user equipment selects the first CTU resource from multiple contention transmission unit CTU resources, and maps the data to the first CTU resource for transmission.

In a grant-free transmission scenario, each contention transmission access region may include multiple CTUs. The UE may select at least one appropriate CTU according to a default mapping rule, to perform grant-free transmission on the CTU. The default mapping rule may be preset on the user equipment and the access network device, or may be informed by the access network device to the user equipment by using higher layer signaling.

Optionally, in another embodiment, the method in FIG. 4 further includes: selecting, by the user equipment, a second CTU resource from the multiple CTU resources; and when the user equipment sends the first request message to the core network device by using the access network device, mapping, by the user equipment, the first request message to the second CTU resource to send the first request message to the access network device, so that the access network device sends the first request message to the core network device.

For example, in an idle state, the user equipment does not establish an RRC connection to the access network device. In this case, the user equipment may transmit the first request message by using a CTU resource. For example, the user equipment may select an appropriate CTU from multiple CTUs in an access region, to transmit the first request message.

It should be understood that the first CTU resource and the second CTU resource may be the same. This can simplify system design. Alternatively, the first CTU resource and the second CTU resource may be different, that is, a corresponding CTU may be selected according to an actual need of the first request message. This can improve resource utilization.

Optionally, in another embodiment, before the user equipment sends the first request message to the core network device by using the access network device, the method in FIG. 4 further includes: receiving, by the user equipment, a system information block SIB message that is broadcast by the access network device, where the SIB message includes a public key generated by the core network device; encrypting, by the user equipment, the first request message by using the public key; and sending, by the user equipment, the encrypted first request message to the core network device by using the access network device.

Specifically, to ensure security of the first request message and the first response message, the core network device may generate a pair of the public key and a private key, and sends the public key to the access network device. The access network device broadcasts, over a broadcast channel, the SIB message to the user equipment within coverage of the access network device, where the SIB message carries the public key. The user equipment extracts the public key from the received SIB message, and encrypts the first request message by using the public key. The user equipment may select an appropriate CTU, and map the first request message encrypted in a grant-free manner to the selected CTU, to send the first request message to the access network device. The access network device performs blind detection, and sends the detected first request message to the core network device. The core network device decrypts the first request message by using the private key, performs authentication on the user equipment according to the decrypted first request message, and allocates, to the user equipment, the user identifier and the key that are specially used for grant-free transmission. The core network device encrypts, by using the private key, the first response message that includes the user equipment identifier and the key, and sends the encrypted first response message to the user equipment by using the access network device. The user equipment decrypts the first response message by using the public key, to obtain the user equipment identifier and the key that are allocated by the core network device and that are specially used for grant-free transmission. For example, the access network device may send the first response message by using a broadcast message similar to an SIB message. In addition, the broadcast message may carry an identifier associated with a CTU that is used for sending the first request message, so that the user equipment can identify and receive the first response message.

In step 420, the user equipment encrypts and encapsulates the data at a transport adaptation layer of the user equipment by using the key and the user equipment identifier.

Optionally, in another embodiment, the method in FIG. 4 further includes: receiving, by the user equipment, indication information of the multiple CTU resources that is sent by the access network device, where the indication information is used to indicate the CTU resources that can be used by the user equipment.

For example, the access network device may broadcast, over a broadcast channel, the indication information of the multiple CTU resources to the user equipment within coverage of the access network device. The user equipment may select at least one appropriate CTU resource from the multiple CTU resources according to a preset mapping rule, to perform grant-free transmission.

Alternatively, in another embodiment, the multiple CTU resources that can be used for the user equipment may be preset on the user equipment.

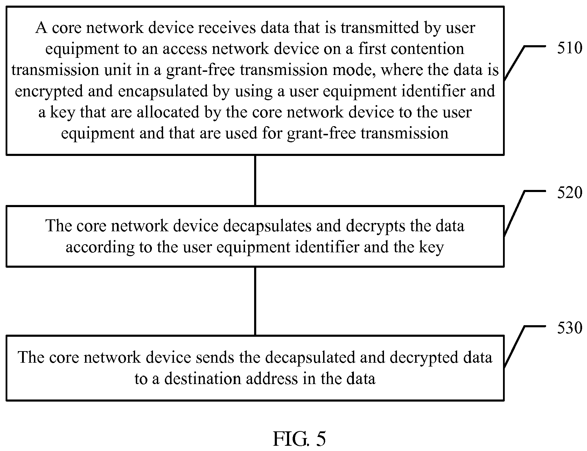

FIG. 5 is a schematic flowchart of a grant-free transmission method according to another embodiment of the present invention. For example, a core network device is an LDSF, and the method in FIG. 5 may be executed by the core network device (for example, the LDSF in FIG. 1). The embodiment in FIG. 5 corresponds to the embodiment in FIG. 4. Some details are omitted herein as appropriate. An access network device in this embodiment is the network device in FIG. 2.

510: The core network device receives, from the access network device, data transmitted by user equipment on a first contention transmission unit in a grant-free transmission mode, where the data is encrypted and encapsulated by using a user equipment identifier and a key that are allocated by the core network device to the user equipment and that are used for grant-free transmission.

520: The core network device decapsulates and decrypts the data according to the user equipment identifier and the key.

530: The core network device sends the decapsulated and decrypted data to a destination address in the data.

Specifically, the core network device may allocate, to the user equipment according to a request that is sent by the user equipment by using the access network device, the user equipment identifier and the key that are specially used for grant-free transmission. After receiving the data of the user equipment forwarded by the access network device, the core network device decrypts the data by using the key, and then distributes the decrypted data to a destination (for example, an access network device corresponding to a destination address in the packet). The core network device may manage distribution of uplink data from multiple access network devices in a network, and the core network device establishes, with each access network device, a dedicated channel for an uplink packet that is transmitted in a grant-free manner.

According to this embodiment of the present invention, a core network device provides, for user equipment, a user equipment identifier and a key that are specially used for grant-free transmission, and decapsulates and decrypts received data by using the user equipment identifier and the key. Because redundant additional information of a protocol stack is avoided, simple and effective communication is implemented. Moreover, using a dedicated user identifier and a dedicated key ensures data transmission security. Therefore, simple, effective, and secure communication is implemented in a grant-free transmission scenario.

Optionally, in another embodiment, the method in FIG. 5 further includes: receiving, by the core network device, a first request message from the user equipment by using the access network device, where the first request message is used to indicate that the user equipment supports grant-free transmission and to request the core network device to allocate, to the user equipment, the user equipment identifier and the key that are used for grant-free transmission; allocating, by the core network device to the user equipment, the user equipment identifier and the key that are used for grant-free transmission; and sending, by the core network device, a first response message to the user equipment by using the access network device, where the first response message carries the user equipment identifier and the key.

Specifically, when receiving the first request message sent by the access network device, the core network device interacts with an HSS or an HLR according to the user equipment identifier indicated by the first request message, to perform an identity authentication process and an authentication process on the user equipment. After identity authentication of the user equipment succeeds and it is confirmed that the user equipment has grant-free transmission permission, the core network device may allocate the user equipment grant-free identifier to the user equipment. Then, the core network device further performs a security process to allocate, to the user equipment, the grant-free key that is required for grant-free transmission and that is used for packet encryption and decryption.

The foregoing identity authentication, authentication, and security processes are similar to conventional identity authentication, authentication, and security processes of user equipment, and details are not described herein. A difference from the conventional processes lies in that: a result of performing the foregoing processes is allocating, to the user equipment, the user equipment identifier and the key that are specially used for grant-free transmission.

Optionally, in another embodiment, the method in FIG. 5 further includes: generating, by the core network device, a pair of a public key and a private key; sending, by the core network device, the public key to the user equipment by using the access network device; and decrypting, by the core network device by using the private key, the first request message that includes the public key.

Specifically, the public key is used to encrypt the first request message. The encrypted first request message can be decrypted only by the core network device by using the private key. This ensures that a register grant-free request message is not hijacked. In addition, the first request message may include a user equipment identifier (the identifier is a common user equipment identifier, distinguished from the user equipment identifier that is specially used for grant-free transmission). The user equipment identifier may be encrypted together with the first request message, so that the core network device can determine that the first request message is sent by user equipment that has the user equipment identifier. This ensures that the user equipment identifier and the key that are specially used for grant-free transmission and that are obtained by using the first request message or the first response message can be trusted, thereby ensuring subsequent secure grant-free transmission performed by using the user equipment identifier and the key that are specially used for grant-free transmission.

According to this embodiment of the present invention, the first request message is a non-access stratum message/an attach message, the non-access message/attach message includes a register grant-free request field, the first response message is a non-access accept message/an attach accept message, and the non-access accept message/attach accept message includes a register grant-free response field.

Alternatively, in another embodiment, the first request message is a register grant-free request message, and the first response message is a registration response message.

In step 520, the core network device decapsulates and decrypts the data at a transport adaptation layer of the core network device by using the user equipment identifier and the key.

According to this embodiment of the present invention, the core network device is an independent physical device with a low-delay service function, or the core network device is a mobility management entity, where the mobility management entity includes a low-delay service function entity.

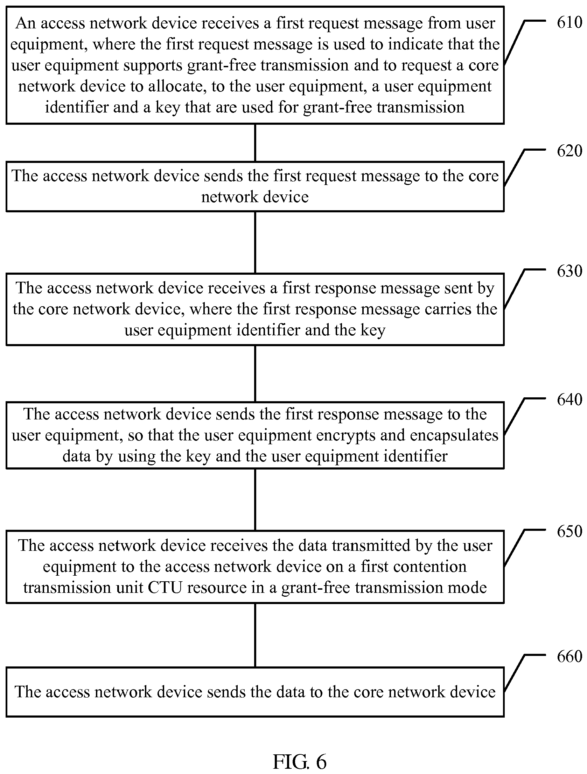

FIG. 6 is a schematic flowchart of a grant-free transmission method according to still another embodiment of the present invention. The method in FIG. 6 is executed by the access network device in FIG. 1. The embodiment in FIG. 6 corresponds to the embodiment in FIG. 4. Some details are omitted herein as appropriate. In this embodiment, descriptions are provided by using an example in which an access network device is the access network device in FIG.1.

610: The access network device receives a first request message from user equipment, where the first request message is used to indicate that the user equipment supports grant-free transmission and to request a core network device to allocate, to the user equipment, a user equipment identifier and a key that are used for grant-free transmission.

620: The access network device sends the first request message to the core network device.

630: The access network device receives a first response message sent by the core network device, where the first response message carries the user equipment identifier and the key.

640: The access network device sends the first response message to the user equipment, so that the user equipment encrypts and encapsulates data by using the key and the user equipment identifier.

650: The access network device receives the data that is transmitted by the user equipment to the access network device on a first contention transmission unit CTU resource in a grant-free transmission mode.

660: The access network device sends the data to the core network device.

According to this embodiment of the present invention, an access network device provides, for user equipment, a user equipment identifier and a key that are allocated by a core network device and that are specially used for grant-free transmission, receives data that is transmitted by the user equipment on a CTU resource in a grant-free transmission mode, and forwards the data to the core network device. Because redundant additional information of a protocol stack is avoided, simple and effective communication is implemented. Moreover, using a dedicated user identifier and a dedicated key ensures data transmission security. Therefore, simple, effective, and secure communication is implemented in a grant-free transmission scenario.

According to this embodiment of the present invention, in step 610, the access network device receives the first request message that is transmitted by the user equipment on a second CTU resource in multiple CTU resources. The multiple CTU resources include the first CTU and the second CTU.

Optionally, in another embodiment, the method in FIG. 6 further includes: receiving, by the access network device, a public key from the core network device, and broadcasting, by the access network device, the public key in a system information block SIB message. In step 620, the access network device receives the first request message encrypted by the user equipment by using the public key, and sends the encrypted first request message to the core network device. In step 630, the access network device receives the first response message encrypted by the core network device by using a private key.

Optionally, in another embodiment, the method in FIG. 6 further includes: sending, by the access network device, indication information of the multiple CTU resources to the user equipment.

According to this embodiment of the present invention, the first request message is a non-access stratum message/an attach message, the non-access message/attach message includes a register grant-free request field, the first response message is a non-access accept message/an attach accept message, and the non-access accept message/attach accept message includes a register grant-free response field.

Alternatively, in another embodiment, the first request message is a register grant-free request message, and the first response message is a registration response message.

According to this embodiment of the present invention, the core network device is an independent physical device with a low-delay service function, or the core network device is a mobility management entity, where the mobility management entity includes a low-delay service function entity.

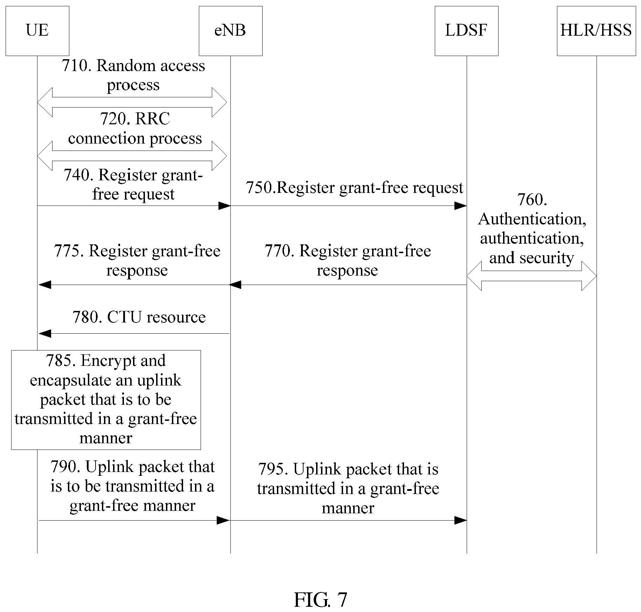

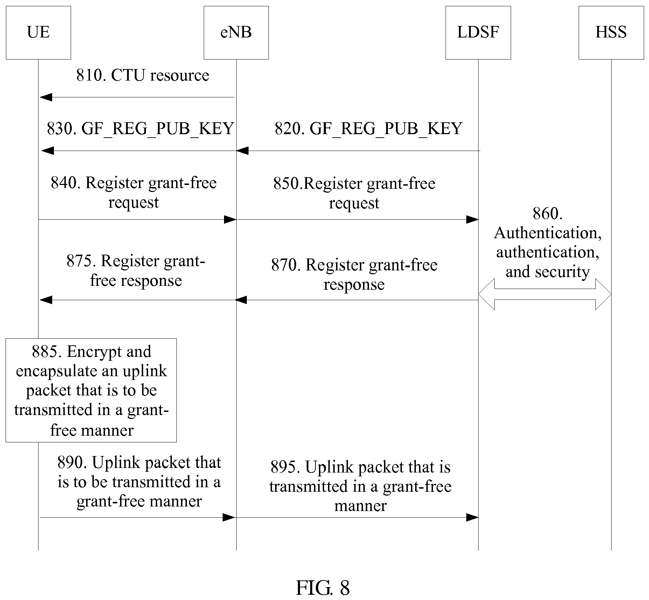

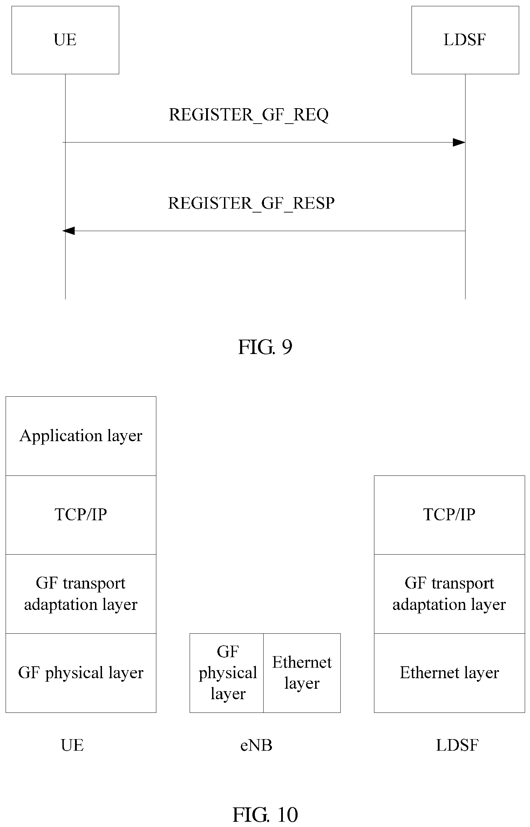

The following describes a grant-free transmission process in detail with reference to embodiments in FIG. 7, FIG. 8, and FIG. 9. FIG. 9 is a schematic diagram of a signaling flow used for grant-free transmission according to another embodiment of the present invention. Referring to FIG. 9, the following signaling process is executed in both the embodiments in FIG. 7 and FIG. 8: UE sends a register grant-free request (REGISTER_GF_REQ) to an LDSF, and the LDSF sends a register grant-free response (REGISTER_GF_RESP) to the UE, so that the LDSF allocates, to the user equipment, a user equipment identifier and a key that are used for grant-free transmission.

FIG. 7 is a schematic flowchart based on a grant-free transmission process according to another embodiment of the present invention. The process in FIG. 7 is an example of the methods in FIG. 4, FIG. 5, and FIG. 6. Some details are omitted herein as appropriate. In FIG. 7, descriptions are provided by using an example in which an access network device is an eNB. The eNB represents a control base station of a cell that UE currently serves. However, the present invention is not limited to a specific standard represented by the term, but may be similarly applied to base stations of other standards.

In this embodiment, how to implement grant-free transmission when user equipment is in a connected state is described. In this embodiment, the user equipment supports both conventional grant-based transmission and grant-free transmission. That is, grant-based transmission and grant-free transmission are compatible in the user equipment, and therefore, transition from grant-based transmission to grant-free transmission can be provided. For example, generally, when the user equipment performs grant-based transmission, when a condition for grant-free transmission is met (for example, a preset condition is met or a switching instruction is received), the user equipment switches from grant-based transmission to grant-free transmission.

When grant-free transmission needs to be performed, user equipment supporting a grant-free transmission function may establish a connection to an LDSF by means of a process of requesting to register for grant-free transmission. By means of the process, the LDSF may allocate, to the user equipment, a user equipment grant-free identifier (UE_GF_ID) and a grant-free key (GF_KEY) that are used for grant-free transmission.

In steps 710 and 720, a random access process and an RRC connection process are performed between the user equipment and the eNB.

Upon joining a network, the user equipment performs the random access process and the RRC connection process to establish a connection to the network. After completing RRC connection, the user equipment enters a connected state. The foregoing processes are similar to conventional random access and RRC connection processes, and details are not described herein.

740: The user equipment sends a register grant-free request (REGISTER_GF_REQ) message to the eNB, to request to register for grant-free transmission, that is, to request, by using the eNB, the LDSF to allocate, to the user equipment, the user equipment grant-free identifier and the grant-free key that are required for grant-free transmission.

When the LDSF provides a registration function for the user equipment, the LDSF may be an independent physical device, or may be a function entity in a mobility management entity (MME). The register grant-free request message may be a newly added dedicated signaling message, or may be a message field newly added to an existing signaling message. For example, the register grant-free request message may be a separate signaling message or may be a field that is newly added to a non-access stratum request message/an attach request message, and is used to indicate that the user equipment supports a grant-free transmission function and to request identity information registration for grant-free transmission. For example, a register grant-free request (REGISTER_GF_REQ) field may be added to an existing non-access stratum request message/attach request message, so that the LDSF receiving the non-access stratum request message/attach request message knows that the user equipment supports a grant-free transmission function, and therefore allocates, to the user equipment, the user equipment grant-free identifier and the grant-free key that are required for grant-free transmission.

The user equipment may send the register grant-free request message to the LDSF by using an air interface. Because the LDSF needs to identify different user equipments, the user equipment may add a user equipment ID (UEID) to the register grant-free request message. For example, the UEID may be an international mobile subscriber identity (IMSI), an international mobile equipment identity (IMEI), or the like.

If the register grant-free request message is a newly added dedicated signaling message, when the LDSF needs to identify the user equipment, the LDSF may directly obtain the UEID from the register grant-free request message. If the register grant-free request message is a REGISTER_GF_REQ message field in a non-access stratum request message/an attach request message, the UEID does not need to be carried in the REGISTER_GF_REQ message field; the LDSF may indirectly obtain the UEID from another message field in the non-access stratum request message/attach request message.

750: The eNB forwards the register grant-free request message to the LDSF.

The user equipment may send the register grant-free request message to the LDSF by using an air interface. That is, the user equipment first sends the register grant-free request message to the eNB, and then, the eNB forwards the register grant-free request message to the LDSF over a channel between the eNB and the LDSF. The channel between the eNB and the LDSF may be established when the eNB is started, and is similar to an S1 interface between the eNB and an MME. Because the LDSF needs to identify different user equipments, alternatively, the eNB may add the UEID to the register grant-free request message, and the user equipment does not need to add the UEID to the register grant-free request message when sending the register grant-free request. This can reduce resources used in air-interface transmission. Certainly, as described above, the register grant-free request message sent by the user equipment to the eNB may directly carry the UEID. In this case, the eNB transparently transmits the register grant-free request message to the LDSF.

760: The LDSF performs authentication (Authority), authentication (Authentication), and security (Security) processes with an HLR/HSS.

When receiving the register grant-free request message forwarded by the eNB, the LDSF performs the identity authentication and authentication processes on the user equipment according to the UEID indicated by the register grant-free request message. After identity authentication of the user equipment succeeds and it is confirmed that the user equipment has grant-free transmission permission, the LDSF allocates the user equipment grant-free identifier (UE_GF_ID) to the user equipment. Then, the LDSF further performs the security process to allocate, to the user equipment, the grant-free key (GF_KEY) that is required for grant-free transmission and that is used for data encryption and decryption.

If the register grant-free request message is a message field in a non-access stratum request message/an attach request message, the identity authentication, authentication, and security processes may be triggered by the non-access stratum request message/attach request message. Specifically, when receiving the non-access stratum request message/attach request message, the LDSF performs the identity authentication process according to the UEID. When authentication succeeds, the authentication process is performed to determine whether the user equipment has the grant-free transmission permission. In addition, the security process is performed to obtain the grant-free key that is required for grant-free transmission and that is used for encryption and decryption, and to allocate the user equipment grant-free identifier to the user equipment.

If the register grant-free request message is a newly added dedicated signaling message, the LDSF needs to perform identity authentication on the user equipment by means of the identity authentication process, and determine, by means of the authentication process, whether the user equipment has the grant-free transmission permission. If the user equipment has the grant-free transmission permission, the LDSF performs the security process to obtain the grant-free key that is required for grant-free transmission and that is used for encryption and decryption, and to allocate the user equipment grant-free identifier to the user equipment.

770: The LDSF sends a register grant-free response message (REGISTER_GF_RESP) to the eNB.

The LDSF adds, to the register grant-free response message, the user equipment grant-free identifier (UE_GF_ID) and the grant-free key (GF_KEY) that are allocated to the user equipment. The register grant-free response message may be a newly added dedicated signaling message, or may be a REGISTER_GF_RESP message field newly added to an existing signaling message. For example, the register grant-free response message may be a field newly added to a non-access stratum accept message/an attach accept message. The REGISTER_GF_RESP is similar to the REGISTER_GF_REQ. When the REGISTER_GF_REQ is a message field in a non-access stratum request message/an attach request message, the REGISTER_GF_RESP is a message field in a non-access stratum accept message/an attach accept message and carries parameters about the user equipment grant-free identifier and the grant-free key.

The foregoing identity authentication, authentication, and security processes are similar to conventional identity authentication, authentication, and security processes of user equipment, and details are not described herein. A difference from the conventional processes lies in that: a result of performing the foregoing processes is allocating, to the user equipment, the user equipment grant-free identifier and the grant-free key that are specially used for grant-free transmission.

775: The eNB forwards the register grant-free response message to the user equipment.

The eNB forwards, to the user equipment, the register grant-free response message received from the LDSF. In addition, the eNB may remove the UEID from the register grant-free response message, to save air-interface resources, or may transparently transmit the registration response message directly, to reduce impact on the eNB.

780: The eNB informs the user equipment of a CTU resource used for grant-free transmission.

For example, the eNB may periodically broadcast, over a broadcast channel, the CTU resource used for grant-free transmission. The eNB may broadcast multiple CTU resources once, to form a CTU resource set. These CTU resources may be distributed in one radio frame. One radio frame may include multiple transmission timeslots, and occupies specific frequency domain resources. One CTU resource is a part of a time-frequency resource in one transmission timeslot. Different CTU resources are not completely the same in respect of time-frequency resources, codebooks, pilots, and the like. The user equipment may randomly select a CTU resource or may select a CTU resource according to a preset rule, and transmit an uplink packet by using a time-frequency resource, a code resource, a pilot, and other transmission parameters specified by the CTU resource. When multiple user equipments simultaneously select a same CTU resource for uplink transmission, a transmission relationship based on contention for the resource is formed.

It should be understood that this embodiment of the present invention does not limit a sequence in which the eNB informs the user equipment of the CTU resource. The eNB may inform the user equipment of the CTU resource at any time point before the user equipment transmits an uplink packet that is to be transmitted in a grant-free manner.

785: The user equipment encrypts and encapsulates an uplink packet that is to be transmitted in a grant-free manner.

The user equipment may extract the grant-free key and the user equipment identifier from the received register grant-free response message, and encrypt and encapsulate, by using the grant-free key and the user equipment identifier, the uplink packet that is to be transmitted in a grant-free manner.

For example, when the user equipment needs to transmit an uplink packet, the user equipment first determines whether to perform transmission in a grant-free transmission mode, and when a condition for grant-free transmission is met, determines to perform transmission in the grant-free transmission mode. When the user equipment needs to perform grant-free transmission, the user equipment needs to encrypt a packet by using the grant-free key and encapsulate the encrypted packet with the user equipment grant-free identifier.

790: The user equipment sends, to the eNB, the uplink packet that is to be transmitted in a grant-free manner.

Specifically, the user equipment may randomly select one CTU resource or one group of CTU resources from multiple CTU resource sets broadcast by the eNB, and then determine a time-frequency resource, a codebook, and a pilot in each CTU resource. The user equipment encodes the packet by using a codebook and a pilot corresponding to the selected CTU, and maps an encoded packet to a time-frequency resource corresponding to the CTU, to transmit the packet.

795: The eNB sends, to the LDSF, the uplink packet that is transmitted in a grant-free manner.

The eNB performs, on a CTU resource, blind detection on the uplink packet that is transmitted in a grant-free manner, and forwards, to the LDSF, the received uplink packet that is transmitted in a grant-free manner. The LDSF decrypts the uplink packet that is transmitted in a grant-free manner, and distributes the decrypted uplink packet to a destination address of the uplink packet.

Specifically, after receiving the uplink packet that is transmitted by the user equipment in a grant-free manner and that is forwarded by the eNB, the LDSF decrypts the packet by using the grant-free key of the user equipment, and then distributes the decrypted packet to a destination (for example, an access network device corresponding to a destination address in the packet). When the LDSF performs a function of distributing the uplink packet that is transmitted in a grant-free manner, the LDSF may be an independent physical device, or may be an entity function of an S-GW or a P-GW. The LDSF manages distribution of uplink packets that are transmitted in a grant-free manner and that are from multiple eNBs in a network. The LDSF establishes, with each eNB, a dedicated transmission channel for an uplink packet that is transmitted in a grant-free manner. All uplink packets of user equipment, that are transmitted in a grant-free manner, in the eNB are transmitted over the transmission channel. After receiving the uplink packet that is transmitted by the user equipment in a grant-free manner and that is forwarded by the base station, the LDSF decrypts the packet by using the grant-free key of the user equipment, and then distributes the decrypted packet to the destination (for example, an access network device corresponding to a destination address in the packet).

FIG. 8 is a schematic flowchart based on a grant-free transmission process according to another embodiment of the present invention. The process in FIG. 8 is an example of the methods in FIG. 3, FIG. 4, and FIG. 5. Some details are omitted herein as appropriate. In FIG. 8, descriptions are provided by using an example in which an access network device is an eNB. The eNB represents a control base station of a cell that UE currently serves. However, the present invention is not limited to a specific standard represented by the term, but may be similarly applied to base stations in other forms.

In this embodiment, how to implement grant-free transmission when user equipment is in an idle state or does not establish an RRC connection to a network side is described. In the idle state, the user equipment supports only grant-free transmission and does not support grant-based transmission. For example, the user equipment may be a machine type communication (MTC) device that has very high requirements on a transmission delay, reliability, power consumption, and the like and that has a low requirement on a transmission rate. When transmitting a packet, the user equipment does not need to establish a connection to a network in advance, and does not require that the network allocate, to the user equipment, a dedicated time-frequency resource required for transmission. All packets or messages are transmitted in a grant-free transmission mode.

When performing grant-free transmission, the user equipment may establish a connection to an LDSF by means of a process of requesting to register for grant-free transmission. By means of the process, the LDSF may allocate, to the user equipment, a user equipment grant-free identifier (UE_GF_ID) and a grant-free key (GF_KEY) that are used for grant-free transmission.

810: The eNB informs the user equipment of a grant-free CTU resource.

For example, the eNB may periodically broadcast, over a broadcast channel, the CTU resource used for grant-free transmission. The eNB may broadcast multiple CTU resources once, to form a CTU resource set. These CTU resources may be distributed in one radio frame. One radio frame may include multiple transmission timeslots, and occupies specific frequency domain resources. One CTU resource is a part of a time-frequency resource in one transmission timeslot. Different CTU resources are not completely the same in respect of time-frequency resources, codebooks, pilots, and the like. The user equipment may randomly select a CTU resource or may select a CTU resource according to a preset rule, and transmit an uplink packet by using a time-frequency resource, a code resource, a pilot, and other transmission parameters specified by the CTU resource. When multiple user equipments simultaneously select a same CTU resource for uplink transmission, a transmission relationship based on contention for the resource is formed.

It should be understood that this embodiment of the present invention does not limit a sequence in which the eNB informs the user equipment of the CTU resource. The eNB may inform the user equipment of the CTU resource at any time point before the user equipment transmits an uplink packet.

820: The LDSF sends a grant-free register public key (GF_REG_PUB_KEY) to the eNB.

The LDSF may generate a key pair including a pair of the public key and a private key, and send the public key to all eNBs that are within control. The public key is used to encrypt information, and is used to decrypt information encrypted by using the private key. The private key is used to encrypt information, and is used to decrypt information encrypted by using the public key.

830: The eNB broadcasts, in a cell to which the eNB belongs, the grant-free register public key (GF_REG_PUB_KEY) to the user equipment, so that the user equipment encrypts, by using the GF_REG_PUB_KEY, a packet that needs to be transmitted, so as to ensure that the packet is not hijacked during a transmission process. For example, after receiving the GF_REG_PUB_KEY sent by the LDSF, the base station may broadcast the GFREG PUBKEY to the user equipment by using a system information block (System information block, SIB) message.

It should be understood that this embodiment of the present invention does not limit a sequence in which the eNB obtains the public key and informs the user equipment of the public key. The eNB may inform the user equipment of the public key at any time point before the user equipment sends a register grant-free request.

840: The user equipment sends a register grant-free request (REGISTER_GF_REQ) message to the eNB, to request to register for grant-free transmission, that is, to request, by using the eNB, the LDSF to allocate, to the user equipment, a user equipment grant-free identifier and a grant-free key that are required for grant-free transmission.

The LDSF may be an independent physical device, or may be a function entity in a mobility management entity (MME). The register grant-free request message may be a newly added dedicated signaling message, or may be a REGISTER_GF_REQ message field newly added to an existing signaling message.

The user equipment may transmit the register grant-free request message on the CTU resource. When transmitting the register grant-free request message, the user equipment may encrypt the register grant-free request message by using the public key.

The user equipment may send the register grant-free request message to the LDSF by using an air interface. Because the LDSF needs to identify different user equipments, the user equipment may add a user equipment ID (UEID) to the register grant-free request message.

It should be understood that step 820 and step 830 are optional. When step 820 and step 830 are omitted, in step 840, the register grant-free request message may be directly sent on the CTU resource without being encrypted.

850: The eNB sends the register grant-free request message to the LDSF.

The eNB performs blind detection on the register grant-free request message on a CTU resource, and sends, to the LDSF, the register grant-free request message that is obtained through blind detection. The eNB forwards the register grant-free request message to the LDSF over a channel between the eNB and the LDSF. The channel between the eNB and the LDSF may be established when the eNB is started, and is similar to an S1 interface between the eNB and an MME.

860: The LDSF performs authentication (Authority), authentication (Authentication), and security (Security) processes with an HLR/HSS.

Because the public key is the public key in the key pair generated by the LDSF, the register grant-free request message encrypted by using the public key can be decrypted only by the LDSF by using the private key. This ensures that the register grant-free request message is not hijacked. The register grant-free request message includes the UEID. The UEID is also encrypted together with the register grant-free request message. Therefore, the LDSF can also determine that the register grant-free request message is sent by the user equipment that has the UEID.

When receiving the register grant-free request message sent by the eNB, the LDSF interacts with the HSS or the HLR according to the UEID indicated by the register grant-free request message, to perform the identity authentication process and the authentication process on the user equipment. After identity authentication of the user equipment succeeds and it is confirmed that the user equipment has grant-free transmission permission, the LDSF allocates the user equipment grant-free identifier to the user equipment. Then, the LDSF further needs to perform the security process to allocate, to the user equipment, the grant-free key that is required for grant-free transmission and that is used for packet encryption and decryption.

The LDSF needs to perform identity authentication on the user equipment by means of the authentication process, and determine, by means of the authentication process, whether the user equipment has the grant-free transmission permission. If the user equipment has the grant-free transmission permission, the LDSF performs the security process to obtain the grant-free key that is required for grant-free transmission and that is used for encryption and decryption, and to allocate the user equipment grant-free identifier to the user equipment.

870: The LDSF sends a register grant-free response message to the eNB.

The LDSF adds, to the register grant-free response message, the user equipment grant-free identifier (UE_GF_ID) and the grant-free key (GF_KEY) that are allocated to the user equipment. The register grant-free response message may be a newly added dedicated signaling message, or may be a REGISTER_GF_RESP message field newly added to an existing signaling message.

The foregoing identity authentication, authentication, and security processes are similar to conventional identity authentication, authentication, and security processes of user equipment, and details are not described herein. A difference from the conventional processes lies in that: a result of performing the foregoing processes is allocating, to the user equipment, the user equipment grant-free identifier and the grant-free key that are specially used for grant-free transmission.

875: The eNB forwards the register grant-free response message to the user equipment.

The eNB forwards, to the user equipment, the register grant-free response message received from the LDSF. The eNB may remove the UEID from the register grant-free response message, to save air-interface resources, or may transparently transmit the registration response message directly, to reduce impact on the eNB.

For example, the terminal may receive, by means of blind detection, the register grant-free response message sent by the eNB.

885: The user equipment encrypts and encapsulates an uplink packet that is to be transmitted in a grant-free manner.

The user equipment may extract the grant-free key and the user equipment identifier from the received register grant-free response message, and encrypt and encapsulate, by using the grant-free key and the user equipment identifier, the uplink packet that is to be transmitted in a grant-free manner.

For example, when the user equipment needs to transmit an uplink packet, the user equipment first determines whether to perform transmission in a grant-free transmission mode, and when a condition for grant-free transmission is met, determines to perform transmission in the grant-free transmission mode. When the user equipment needs to perform grant-free transmission, the user equipment needs to encrypt a packet by using the grant-free key and encapsulate the encrypted packet with the user equipment grant-free identifier.

It should be understood that, when sending the register grant-free response message, the LDSF may encrypt the register grant-free response message by using the private key in the key pair. After receiving the register grant-free response message, the user equipment may decrypt the register grant-free response message by using the corresponding public key. In this way, the user equipment can ensure that the register grant-free response message is sent by the LDSF generating the public key rather than by another device that cannot be trusted. This ensures that the user equipment grant-free identifier and the grant-free key that are obtained by using the register grant-free response message can be trusted, thereby ensuring subsequent secure grant-free transmission performed by using the user equipment grant-free identifier and the grant-free key.

890: The user equipment sends, to the eNodeB, the uplink packet that is to be transmitted in a grant-free manner.

Specifically, the user equipment may randomly select one CTU resource or one group of CTU resources from multiple CTU resource sets broadcast by the eNB, and then determine a time-frequency resource, a codebook, and a pilot in each CTU resource. The user equipment encodes the packet by using a codebook and a pilot corresponding to the selected CTU, and maps an encoded packet to a time-frequency resource corresponding to the CTU, to transmit the packet.

895: The eNB forwards, to the LDSF, the uplink packet that is transmitted in a grant-free manner.

The eNB performs, on a CTU resource, blind detection on the uplink packet that is transmitted in a grant-free manner, and sends, to the LDSF, the received uplink packet that is transmitted in a grant-free manner. The LDSF decrypts the uplink packet that is transmitted in a grant-free manner, and distributes the decrypted uplink packet to a destination address of the uplink packet.

Specifically, after receiving the uplink packet that is transmitted by the user equipment in a grant-free manner and that is forwarded by the eNB, the LDSF decrypts the packet by using the grant-free key of the user equipment, and then distributes the decrypted packet to a destination (for example, an access network device corresponding to a destination address in the packet). When the LDSF performs a function of distributing the uplink packet that is transmitted in a grant-free manner, the LDSF may be an independent physical device, or may be an entity function of S-GW or P-GW user equipment. The LDSF may manage distribution of uplink packets that are transmitted in a grant-free manner and that are from multiple eNBs in a network. The LDSF establishes, with each eNB, a dedicated channel for an uplink packet that is transmitted in a grant-free manner. All packets that are transmitted by user equipment in a grant-free manner and that are in the eNB are transmitted over the channel. After receiving the uplink packet that is transmitted by the user equipment in a grant-free manner and that is forwarded by the base station, the LDSF decrypts the packet by using the grant-free key of the user equipment, and then distributes the decrypted packet to the destination (for example, an access network device corresponding to a destination address in the packet).

FIG. 10 is a schematic diagram of a protocol stack used for grant-free transmission according to an embodiment of the present invention.

A difference from a conventional protocol stack lies in that, a transport adaptation layer and a physical layer in this embodiment of the present invention are used for grant-free transmission. Referring to FIG. 10, protocol stacks, of user equipment, an eNB, and an LDSF, used for grant-free transmission are described in detail.

The user equipment is an initial node of grant-free packet transmission. The protocol stack, of the user equipment, used for grant-free transmission includes an application layer, a TCP layer/an IP layer, a grant-free transport adaptation layer, and a grant-free physical layer. Functions implemented at the grant-free transport adaptation layer include: When an uplink packet that is to be transmitted in a grant-free manner is being sent, the packet can be encrypted by using a GF_KEY, and the encrypted packet can be encapsulated with a UE_GF_ID. Functions implemented at the grant-free physical layer include: One CTU resource or one group of CTU resources is randomly selected from a CTU resource set that is broadcast by the eNB, and then, a codebook and a pilot in each CTU is determined; a data packet is encoded by using the determined resources and parameters, so that a generated code stream is suitable for transmission on the CTU; the generated code stream is sent in a CTU-specific manner.

The eNB implements relay forwarding of a packet that is transmitted in a grant-free manner. Reception and decoding of the packet that is transmitted in a grant-free manner are implemented at an air-interface physical layer of the eNB. Then, the packet is sent over a transmission channel, for a packet that is transmitted in a grant-free manner, between the eNB and the LDSF. Generally, the transmission channel, for a packet that is transmitted in a grant-free manner, between the eNB and the LDSF is based on an Ethernet protocol. In addition, a tunneling technology is generally used between the Ethernet and the grant-free transport adaptation layer, to implement transparent transmission of a packet that is transmitted in a grant-free manner.

After receiving the packet that is transmitted in a grant-free manner, the LDSF processes, at the grant-free transport adaptation layer, the packet that is transmitted in a grant-free manner, and determines an identity of the user equipment according to the UE_GF_ID in the packet that is transmitted in a grant-free manner, that is, determines whether the user equipment that sends the packet is user equipment that has registered for grant-free transmission. If yes, the LDSF decrypts the packet by using the GF_KEY and distributes the successfully decrypted packet to a destination address of the packet. In addition, the LDSF may be a control point of grant-free transmission, and further needs to perform another function when sending and receiving packets, for example, to count received and sent packets that are transmitted in a grant-free manner, to facilitate charging.

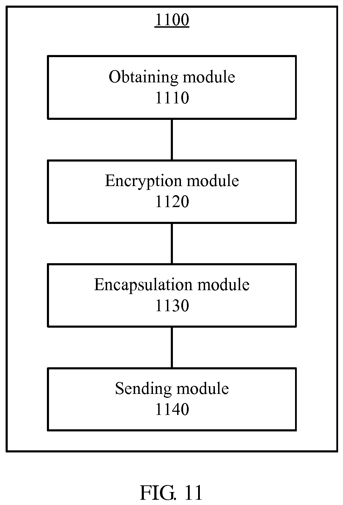

The foregoing describes a collaborated decoding method according to the embodiments of the present invention. The following separately describes user equipment, an access network device, and a core network device according to embodiments of the present invention with reference to FIG. 11 to FIG. 16.

FIG. 11 is a schematic structural diagram of user equipment 1100 according to an embodiment of the present invention. The user equipment 1100 includes an obtaining module 1110, an encryption module 1120, an encapsulation module 1130, and a sending module 1140.

The obtaining module 1110 is configured to obtain a user equipment identifier and a key that are allocated by a core network device and that are used for grant-free transmission. The encryption module 1120 is configured to encrypt data by using the key. The encapsulation module 1130 is configured to encapsulate the data by using the user equipment identifier. The sending module 1140 is configured to transmit the encrypted and encapsulated data to an access network device on a first contention transmission unit CTU resource in a grant-free transmission mode.

According to this embodiment of the present invention, user equipment obtains, from a core network device, a user equipment identifier and a key that are specially used for grant-free transmission, encrypts and encapsulates to-be-transmitted data by using the user equipment identifier and the key, and transmits the data on a CTU resource in a grant-free transmission mode. Because redundant additional information of a protocol stack is avoided, simple and effective communication is implemented. Moreover, using a dedicated user identifier and a dedicated key ensures data transmission security. Therefore, simple, effective, and secure communication is implemented in a grant-free transmission scenario.

According to this embodiment of the present invention, the obtaining module 1110 sends a first request message to the core network device by using the access network device. The first request message is used to indicate that the user equipment supports grant-free transmission and to request the core network device to allocate, to the user equipment, the user equipment identifier and the key that are used for grant-free transmission. In addition, the obtaining module 1110 receives, by using the access network device, a first response message sent by the core network device. The first response message carries the user equipment identifier and the key.

According to this embodiment of the present invention, the sending module 1140 selects the first CTU resource from multiple contention transmission unit CTU resources, and maps the encrypted and encapsulated data to the first CTU resource for transmission.

Optionally, in another embodiment, the sending module 1140 further selects a second CTU resource from the multiple CTU resources, and maps the first request message to the second CTU resource to send the first request message to the access network device, so that the access network device sends the first request message to the core network device.

Optionally, in another embodiment, before the user equipment sends the first request message to the core network device by using the access network device, the obtaining module 1110 further receives a system information block SIB message that is broadcast by the access network device, where the SIB message includes a public key generated by the core network device; the encryption module 1120 encrypts the first request message by using the public key; and the sending module 1140 sends the encrypted first request message to the core network device by using the access network device.

According to this embodiment of the present invention, the first request message is a non-access stratum message/an attach message, the non-access message/attach message includes a register grant-free request field, the first response message is a non-access accept message/an attach accept message, and the non-access accept message/attach accept message includes a register grant-free response field; or the first request message is a register grant-free request message, and the first response message is a registration response message.

Optionally, in another embodiment, the obtaining module 1110 further receives indication information of the multiple CTU resources that is sent by the access network device.

According to this embodiment of the present invention, the encryption module 1120 encrypts the data at a transport adaptation layer of the user equipment by using the key, and the encapsulation module 1130 encapsulates the data at the transport adaptation layer of the user equipment by using the user equipment identifier.

According to this embodiment of the present invention, the core network device is an independent physical device with a low-delay service function, or the core network device is a mobility management entity, where the mobility management entity includes a low-delay service function entity.

For operations and functions of the modules of the user equipment 1100, refer to the method in FIG. 4. To avoid repetition, details are not described herein again.

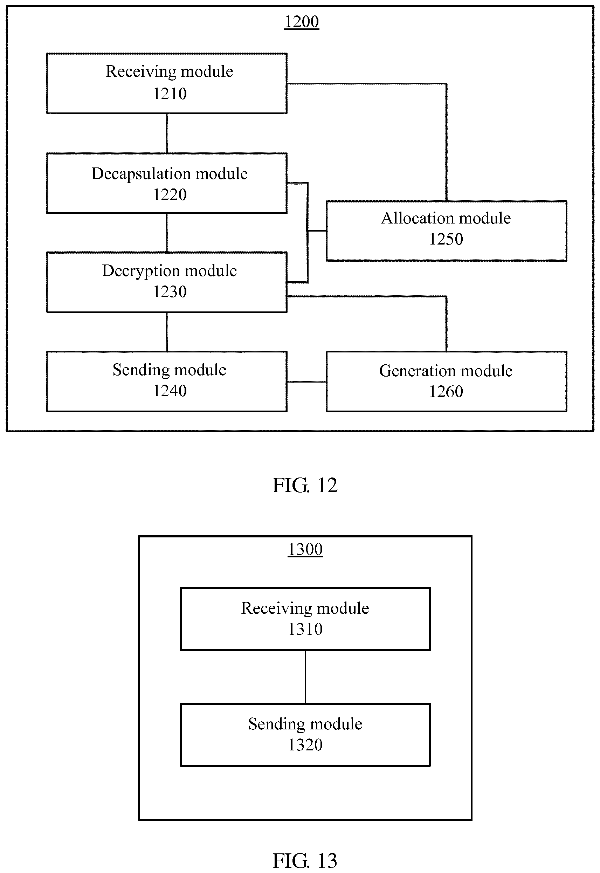

FIG. 12 is a schematic structural diagram of a core network device 1200 according to an embodiment of the present invention. The core network device 1200 includes a receiving module 1210, a decapsulation module 1220, a decryption module 1230, and a sending module 1240.

The receiving module 1210 is configured to receive, from an access network device, data transmitted by user equipment on a first contention transmission unit in a grant-free transmission mode, where the data is encrypted and encapsulated by using a key and a user equipment identifier that are allocated by the core network device to the user equipment and that are used for grant-free transmission.

The decapsulation module 1220 is configured to decapsulate the data according to the user equipment identifier.

The decryption module 1230 is configured to decrypt the data according to the key.

The sending module 1240 is configured to send the decrypted data to a destination address in the data.

According to this embodiment of the present invention, a core network device provides, for user equipment, a user equipment identifier and a key that are specially used for grant-free transmission, and decapsulates and decrypts received data by using the user equipment identifier and the key. Because redundant additional information of a protocol stack is avoided, simple and effective communication is implemented. Moreover, using a dedicated user identifier and a dedicated key ensures data transmission security. Therefore, simple, effective, and secure communication is implemented in a grant-free transmission scenario.

Optionally, in another embodiment, the core network device further includes an allocation module 1250; the receiving module 1210 further receives a first request message from the user equipment by using the access network device, where the first request message is used to indicate that the user equipment supports grant-free transmission and to request the core network device to allocate, to the user equipment, the user equipment identifier and the key that are used for grant-free transmission; the allocation module 1250 allocates, to the user equipment, the user equipment identifier and the key that are used for grant-free transmission; the sending module 1240 further sends a first response message to the user equipment by using the access network device, where the first response message carries the user equipment identifier and the key.

Optionally, in another embodiment, the core network device 1200 further includes a generation module 1260; the generation module 1260 generates a pair of a public key and a private key; the sending module 1240 further sends the public key to the user equipment by using the access network device; the decryption module 1230 further decrypts, by using the private key, the first request message that includes the public key.

According to this embodiment of the present invention, the first request message is a non-access stratum message/an attach message, the non-access message/attach message includes a register grant-free request field, the first response message is a non-access accept message/an attach accept message, and the non-access accept message/attach accept message includes a register grant-free response field; or the first request message is a register grant-free request message, and the first response message is a registration response message.

According to this embodiment of the present invention, the decapsulation module 1220 decapsulates the data at an adaptation layer of the core network device by using the user equipment identifier and the key, and the decryption module 1230 decrypts the data at the adaptation layer of the core network device by using the key.

According to this embodiment of the present invention, the core network device is an independent physical device with a low-delay service function, or the core network device is a mobility management entity, where the mobility management entity includes a low-delay service function entity.

For operations and functions of the modules of the core network device 1200, refer to the method in FIG. 5. To avoid repetition, details are not described herein again.

FIG. 13 is a schematic structural diagram of an access network device 1300 according to an embodiment of the present invention. The access network device 1300 includes a receiving module 1310 and a sending module 1320.

The receiving module 1310 is configured to receive a first request message from user equipment. The first request message is used to indicate that the user equipment supports grant-free transmission and to request a core network device to allocate, to the user equipment, a user equipment identifier and a key that are used for grant-free transmission. The sending module 1320 is configured to send the first request message to the core network device. The receiving module 1310 further receives a first response message sent by the core network device. The first response message carries the user equipment identifier and the key. The sending module 1320 further sends the first response message to the user equipment, so that the user equipment encrypts and encapsulates data by using the key and the user equipment identifier. The receiving module 1310 further receives the data that is transmitted by the user equipment on a first contention transmission unit CTU resource in a grant-free transmission mode. The sending module 1320 further sends the data to the core network device.

According to this embodiment of the present invention, an access network device provides, for user equipment, a user equipment identifier and a key that are allocated by a core network device and that are specially used for grant-free transmission, receives data that is transmitted by the user equipment on a CTU resource in a grant-free transmission mode, and forwards the data to the core network device. Because redundant additional information of a protocol stack is avoided, simple and effective communication is implemented. Moreover, using a dedicated user identifier and a dedicated key ensures data transmission security. Therefore, simple, effective, and secure communication is implemented in a grant-free transmission scenario.

Optionally, in another embodiment, the receiving module 1310 further receives the first request message that is transmitted by the user equipment on a second CTU resource in multiple CTU resources.

Optionally, in another embodiment, the receiving module 1310 further receives a public key from the core network device. The sending module 1320 further broadcasts the public key in a system information block SIB message. The receiving module 1310 receives the first request message that is encrypted by the user equipment by using the public key, and sends the encrypted first request message to the core network device. The receiving module 1310 receives the first response message that is encrypted by the core network device by using a private key.

Optionally, in another embodiment, the sending module 1320 further sends indication information of the multiple CTU resources to the user equipment.

According to this embodiment of the present invention, the first request message is a non-access stratum message/an attach message, the non-access message/attach message includes a register grant-free request field, the first response message is a non-access accept message/an attach accept message, and the non-access accept message/attach accept message includes a register grant-free response field; or the first request message is a register grant-free request message, and the first response message is a registration response message.

According to this embodiment of the present invention, the core network device is an independent physical device with a low-delay service function, or the core network device is a mobility management entity, where the mobility management entity includes a low-delay service function entity.

For operations and functions of the modules of the access network device 1300, refer to the method in FIG. 6. To avoid repetition, details are not described herein again.

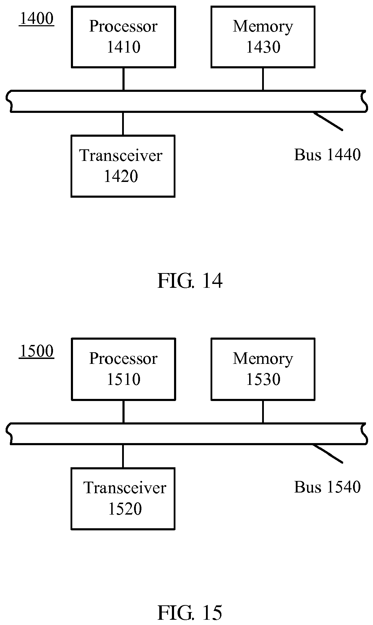

FIG. 14 is a schematic structural diagram of user equipment 1400 according to another embodiment of the present invention. The user equipment 1400 includes a processor 1410, a transceiver 1420, a memory 1430, and a bus 1440.

The processor 1410 is configured to invoke, by using the bus 1440, code stored in the memory 1430, so as to obtain a user equipment identifier and a key that are allocated by a core network device and that are used for grant-free transmission, encrypt data by using the key, and encapsulate the data by using the user equipment identifier. The transceiver 1420 is configured to transmit the encrypted and encapsulated data to an access network device on a first contention transmission unit CTU resource in a grant-free transmission mode.

According to this embodiment of the present invention, user equipment obtains, from a core network device, a user equipment identifier and a key that are specially used for grant-free transmission, encrypts and encapsulates to-be-transmitted data by using the user equipment identifier and the key, and transmits the data on a CTU resource in a grant-free transmission mode. Because redundant additional information of a protocol stack is avoided, simple and effective communication is implemented. Moreover, using a dedicated user identifier and a dedicated key ensures data transmission security. Therefore, simple, effective, and secure communication is implemented in a grant-free transmission scenario.

According to this embodiment of the present invention, the processor 1410 controls the transceiver 1420 to send a first request message to the core network device by using the access network device. The first request message is used to indicate that the user equipment supports grant-free transmission and to request the core network device to allocate, to the user equipment, the user equipment identifier and the key that are used for grant-free transmission. In addition, the processor 1410 controls the transceiver 1420 to receive, by using the access network device, a first response message sent by the core network device. The first response message carries the user equipment identifier and the key.

According to this embodiment of the present invention, the transceiver 1420 selects the first CTU resource from multiple contention transmission unit CTU resources, and maps the encrypted and encapsulated data to the first CTU resource for transmission.

Optionally, in another embodiment, the transceiver 1420 further selects a second CTU resource from the multiple CTU resources, and maps the first request message to the second CTU resource to send the first request message to the access network device, so that the access network device sends the first request message to the core network device.

Optionally, in another embodiment, before the user equipment sends the first request message to the core network device by using the access network device, the transceiver 1420 further receives a system information block SIB message that is broadcast by the access network device, where the SIB message includes a public key generated by the core network device; the processor 1410 encrypts the first request message by using the public key; and the transceiver 1420 sends the encrypted first request message to the core network device by using the access network device.

According to this embodiment of the present invention, the first request message is a non-access stratum message/an attach message, the non-access message/attach message includes a register grant-free request field, the first response message is a non-access accept message/an attach accept message, and the non-access accept message/attach accept message includes a register grant-free response field; or the first request message is a register grant-free request message, and the first response message is a registration response message.

Optionally, in another embodiment, the transceiver 1420 further receives indication information of the multiple CTU resources that is sent by the access network device.

According to this embodiment of the present invention, the processor 1410 encrypts the data at a transport adaptation layer of the user equipment by using the key, and encapsulates the data at the transport adaptation layer of the user equipment by using the user equipment identifier.

According to this embodiment of the present invention, the core network device is an independent physical device with a low-delay service function, or the core network device is a mobility management entity, where the mobility management entity includes a low-delay service function entity.

For operations and functions of the modules of the user equipment 1400, refer to the method in FIG. 4. To avoid repetition, details are not described herein again.

FIG. 15 is a schematic structural diagram of a core network device 1500 according to another embodiment of the present invention. The core network device 1500 includes a processor 1510, a transceiver 1520, a memory 1530, and a bus 1540.

The transceiver 1520 is configured to receive, from an access network device, data transmitted by user equipment on a first contention transmission unit in a grant-free transmission mode, where the data is encrypted and encapsulated by using a key and a user equipment identifier that are allocated by the core network device to the user equipment and that are used for grant-free transmission. The processor 1510 is configured to invoke, by using the bus 1540, code stored in the memory 1530, so as to decapsulate the data according to the user equipment identifier and decrypt the data by using the key. The transceiver 1510 further sends the decrypted data to a destination address in the data.

According to this embodiment of the present invention, a core network device provides, for user equipment, a user equipment identifier and a key that are specially used for grant-free transmission, and decapsulates and decrypts received data by using the user equipment identifier and the key. Because redundant additional information of a protocol stack is avoided, simple and effective communication is implemented. Moreover, using a dedicated user identifier and a dedicated key ensures data transmission security. Therefore, simple, effective, and secure communication is implemented in a grant-free transmission scenario.

Optionally, in another embodiment, the transceiver 1520 further receives a first request message from the user equipment by using the access network device, where the first request message is used to indicate that the user equipment supports grant-free transmission and to request the core network device to allocate, to the user equipment, the user equipment identifier and the key that are used for grant-free transmission; the processor 1510 further allocates, to the user equipment, the user equipment identifier and the key that are used for grant-free transmission; the transceiver 1520 further sends a first response message to the user equipment by using the access network device, where the first response message carries the user equipment identifier and the key.

Optionally, in another embodiment, the processor 1510 further generates a pair of a public key and a private key; the transceiver 1520 further sends the public key to the user equipment by using the access network device; the processor 1510 further decrypts, by using the private key, the first request message that includes the public key.

According to this embodiment of the present invention, the first request message is a non-access stratum message/an attach message, the non-access message/attach message includes a register grant-free request field, the first response message is a non-access accept message/an attach accept message, and the non-access accept message/attach accept message includes a register grant-free response field; or the first request message is a register grant-free request message, and the first response message is a registration response message.

According to this embodiment of the present invention, the processor 1510 decapsulates the data at an adaptation layer of the core network device by using the user equipment identifier and the key, and decrypts the data at the adaptation layer of the core network device by using the key.

According to this embodiment of the present invention, the core network device is an independent physical device with a low-delay service function, or the core network device is a mobility management entity, where the mobility management entity includes a low-delay service function entity.

For operations and functions of the modules of the core network device 1500, refer to the method in FIG. 5. To avoid repetition, details are not described herein again.

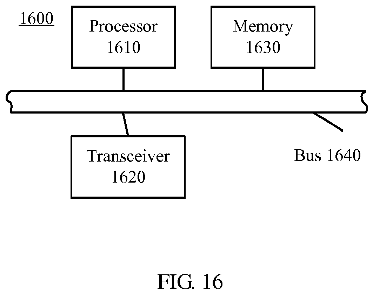

FIG. 16 is a schematic structural diagram of an access network device 1600 according to another embodiment of the present invention. The access network device 1600 includes a processor 1610, a transceiver 1620, a memory 1630, and a bus 1640.

The processor 1610 is further configured to control the transceiver 1620 to: receive a first request message from user equipment, where the first request message is used to indicate that the user equipment supports grant-free transmission and to request a core network device to allocate, to the user equipment, a user equipment identifier and a key that are used for grant-free transmission; and send the first request message to the core network device. The transceiver 1620 further receives a first response message sent by the core network device. The first response message carries the user equipment identifier and the key. The transceiver 1620 further sends the first response message to the user equipment, so that the user equipment encrypts and encapsulates data by using the key and the user equipment identifier. The transceiver 1620 further receives the data that is transmitted by the user equipment on a first contention transmission unit CTU resource in a grant-free transmission mode. The transceiver 1620 further sends the data to the core network device.

According to this embodiment of the present invention, an access network device provides, for user equipment, a user equipment identifier and a key that are allocated by a core network device and that are specially used for grant-free transmission, receives data that is transmitted by the user equipment on a CTU resource in a grant-free transmission mode, and forwards the data to the core network device. Because redundant additional information of a protocol stack is avoided, simple and effective communication is implemented. Moreover, using a dedicated user identifier and a dedicated key ensures data transmission security. Therefore, simple, effective, and secure communication is implemented in a grant-free transmission scenario.

Optionally, in another embodiment, the transceiver 1620 further receives the first request message that is transmitted by the user equipment on a second CTU resource in multiple CTU resources.

Optionally, in another embodiment, the transceiver 1620 further receives a public key from the core network device. The transceiver 1620 further broadcasts the public key in a system information block SIB message. The transceiver 1620 receives the first request message that is encrypted by the user equipment by using the public key, and sends the encrypted first request message to the core network device. The transceiver 1620 receives the first response message that is encrypted by the core network device by using a private key.

Optionally, in another embodiment, the transceiver 1620 further sends indication information of the multiple CTU resources to the user equipment.

According to this embodiment of the present invention, the first request message is a non-access stratum message/an attach message, the non-access message/attach message includes a register grant-free request field, the first response message is a non-access accept message/an attach accept message, and the non-access accept message/attach accept message includes a register grant-free response field; or the first request message is a register grant-free request message, and the first response message is a registration response message.

According to this embodiment of the present invention, the core network device is an independent physical device with a low-delay service function, or the core network device is a mobility management entity, where the mobility management entity includes a low-delay service function entity.

For operations and functions of the modules of the access network device 1600, refer to the method in FIG. 6. To avoid repetition, details are not described herein again.

A person of ordinary skill in the art may be aware that units and algorithm steps with reference to the examples described in the embodiments disclosed in this specification may be implemented by electronic hardware or a combination of computer software and electronic hardware. Whether the functions are performed in a hardware manner or a software manner depends on specific applications and design constraint conditions of the technical solutions.

It may be clearly understood by a person skilled in the art that, for the purpose of convenient and brief description, for detailed working processes of the foregoing system, apparatus, and unit, reference may be made to corresponding processes in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division, and there may be another division manner in actual implementation. For example, multiple units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be electrical, mechanical, or in other forms.

The units described as separate parts may or may not be physically separate, and parts displayed as units may or may not be physical units, may be located in one position, or may be distributed on multiple network units. Some or all of the units may be selected according to actual needs, to achieve the objectives of the solutions in the embodiments.

In addition, function units in the embodiments of the present invention may be integrated into one processing unit, or each of the units may exist alone physically, or two or more units may be integrated into one unit.

When the functions are implemented in a form of a software function unit and sold or used as an independent product, the functions may be stored in a computer readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but the protection scope of the present invention is not limited thereto. Therefore, the protection scope of the present invention shall be subject to the protection scope of the claims.

## Claims

1. A method for grant-free transmission, comprising:
obtaining (410), by a user equipment, a user equipment identifier and a key that are allocated by a core network device and that are used for grant-free transmission;
encrypting and encapsulating (420), by the user equipment, data by using the key and the user equipment identifier; and
transmitting (430), by the user equipment, the encrypted and encapsulated data to an access network device on a first contention transmission unit, CTU, resource in a grant-free transmission mode.

2. The method according to claim 1, wherein the obtaining, by user equipment, a user equipment identifier and a key that are allocated by a core network device and that are used for grant-free transmission comprises:
sending, by the user equipment, a first request message to the core network device by using the access network device, wherein the first request message is used to indicate that the user equipment supports grant-free transmission and to request the core network device to allocate, to the user equipment, the user equipment identifier and the key that are used for grant-free transmission; and
receiving, by the user equipment by using the access network device, a first response message sent by the core network device, wherein the first response message carries the user equipment identifier and the key.

3. The method according to claim 2, wherein the transmitting, by the user equipment, the encrypted and encapsulated data to an access network device on a first CTU resource in a grant-free transmission mode comprises:
selecting, by the user equipment, the first CTU resource from multiple CTU resources, and mapping the encrypted and encapsulated data to the first CTU resource for transmission.

4. The method according to claim 3, wherein the method further comprises:
selecting, by the user equipment, a second CTU resource from the multiple CTU resources, wherein
the sending, by the user equipment, a first request message to the core network device by using the access network device comprises:
mapping, by the user equipment, the first request message to the second CTU resource to send the first request message to the access network device, so that the access network device sends the first request message to the core network device.

5. The method according to any one of claims 2 to 4, before the sending, by the user equipment, a first request message to the core network device by using the access network device, further comprising:
receiving, by the user equipment, a system information block, SIB, message that is broadcast by the access network device, wherein the SIB message comprises a public key generated by the core network device; and
encrypting, by the user equipment, the first request message by using the public key, wherein
the sending, by the user equipment, a first request message to the core network device by using the access network device comprises:
sending, by the user equipment, the encrypted first request message to the core network device by using the access network device.

6. The method according to any one of claims 3 to, further comprising:
receiving, by the user equipment, indication information of the multiple CTU resources that is sent by the access network device.

7. The method according to any one of claims 1 to 6, wherein the encrypting and encapsulating, by the user equipment, data by using the key and the user equipment identifier comprises:
encrypting and encapsulating, by the user equipment, the data at a transport adaptation layer of the user equipment by using the key and the user equipment identifier.

8. A method for grant-free transmission, comprising:
receiving (610), by an access network device, a first request message from a user equipment, wherein the first request message is used to indicate that the user equipment supports grant-free transmission and to request a core network device to allocate, to the user equipment, a user equipment identifier and a key that are used for grant-free transmission;
sending (620), by the access network device, the first request message to the core network device;
receiving (630), by the access network device, a first response message sent by the core network device, wherein the first response message carries the user equipment identifier and the key;
sending (640), by the access network device, the first response message to the user equipment;
receiving (650) on a first contention transmission unit, CTU, resource in a grant-free transmission mode from the user equipment, by the access network device, data encrypted and encapsulated by the user equipment using the key and the user equipment identifier ; and
sending (660), by the access network device, the data to the core network device.

9. The method according to claim 8, wherein
the receiving, by an access network device, a first request message from the user equipment comprises:
receiving, by the access network device, the first request message transmitted by the user equipment on a second CTU resource in multiple CTU resources.

10. The method according to claim 8 or 9, further comprising:
receiving, by the access network device, a public key from the core network device; and
broadcasting, by the access network device, the public key in a system information block, SIB, message, wherein
the sending, by the access network device, the first request message to the core network device comprises:
receiving, by the access network device, the first request message encrypted by the user equipment by using the public key, and sending the encrypted first request message to the core network device; and
the receiving, by the access network device, a first response message sent by the core network device comprises:
receiving, by the access network device, the first response message encrypted by the core network device by using a private key.

11. User equipment (1100), comprising:
an obtaining module (1110), configured to obtain a user equipment identifier and a key that are allocated by a core network device and that are used for grant-free transmission;
an encryption module (1120), configured to encrypt data by using the key;
an encapsulation module (1130), configured to encapsulate the data by using the user equipment identifier; and
a sending module (1140), configured to transmit the encrypted and encapsulated data to an access network device on a first contention transmission unit, CTU, resource in a grant-free transmission mode.

12. The user equipment according to claim 11, wherein the obtaining module is configured to send a first request message to the core network device by using the access network device, wherein the first request message is used to indicate that the user equipment supports grant-free transmission and to request the core network device to allocate, to the user equipment, the user equipment identifier and the key that are used for grant-free transmission; and the obtaining module is configured to receive from the access network device a first response message sent by the core network device, wherein the first response message carries the user equipment identifier and the key.

13. The user equipment according to claim 12, wherein the sending module is configured to select the first CTU resource from multiple CTU resources, and map the encrypted and encapsulated data to the first CTU resource for transmission.

14. The user equipment according to claim 13, wherein the sending module is further configured to select a second CTU resource from the multiple CTU resources, and map the first request message to the second CTU resource to send the first request message to the access network device.

15. The user equipment according to any one of claims 12 to 14, wherein before the user equipment sends the first request message to the core network device by using the access network device, the obtaining module is further configured to receive a system information block, SIB, message that is broadcast by the access network device, wherein the SIB message comprises a public key generated by the core network device; the encryption module is configured to encrypt the first request message by using the public key; and the sending module is configured to send the encrypted first request message to the core network device by using the access network device.

16. The user equipment according to any one of claims 13 to, wherein the obtaining module is further configured to receive indication information of the multiple CTU resources that is sent by the access network device.

17. The user equipment according to any one of claims 12 to 16, wherein the encryption module is configured to encrypt the data at a transport adaptation layer of the user equipment by using the key; and the encapsulation module is configured to encapsulate the data at the transport adaptation layer of the user equipment by using the user equipment identifier.

## Patentansprüche

1. Verfahren zur unlizenzierten Übertragung, umfassend:
Abrufen (410), durch ein Benutzergerät, einer Benutzergerätekennung und eines Schlüssels, die von einer Kernnetzwerkvorrichtung zugewiesen werden und die für unlizenzierte Übertragung verwendet werden;
Verschlüsseln und Verkapseln (420), durch das Benutzergerät, von Daten unter Verwendung des Schlüssels und der Benutzergerätekennung; und
Übertragen (430), durch das Benutzergerät, der verschlüsselten und gekapselten Daten an eine Zugangsnetzwerkvorrichtung auf einer ersten konkurrierenden Übertragungseinheits-(CTU)-Ressource, in einem Modus für unlizenzierte Übertragung.

2. Verfahren nach Anspruch 1, wobei das Abrufen, durch das Benutzergerät, einer Benutzergerätekennung und eines Schlüssels, die von einer Kernnetzwerkvorrichtung zugewiesen werden und die für unlizenzierte Übertragung verwendet werden, Folgendes umfasst:
Senden, durch das Benutzergerät, einer ersten Anforderungsnachricht an die Kernnetzwerkvorrichtung unter Verwendung der Zugangsnetzwerkvorrichtung, wobei die erste Anforderungsnachricht verwendet wird, um anzuzeigen, dass das Benutzergerät unlizenzierte Übertragung unterstützt, und um die Kernnetzwerkvorrichtung aufzufordern, dem Benutzergerät die Benutzerkennung und den Schlüssel zuzuweisen, die für unlizenzierte Übertragung verwendet werden; und
Empfangen, durch das Benutzergerät unter Verwendung der Zugriffsnetzwerkvorrichtung, einer ersten Antwortnachricht, die von der Kernnetzwerkvorrichtung gesendet wird, wobei die erste Antwortnachricht die Benutzergerätekennung und den Schlüssel enthält.

3. Verfahren nach Anspruch 2, wobei das Übertragen, durch das Benutzergerät, der verschlüsselten und gekapselten Daten an eine Zugriffsnetzwerkvorrichtung auf einer ersten CTU-Ressource in einem Modus für unlizenzierte Übertragung Folgendes umfasst:
Auswählen, durch das Benutzergerät, der ersten CTU-Ressource aus mehreren CTU-Ressourcen, und Zuordnen der verschlüsselten und gekapselten Daten zur ersten CTU-Ressource zur Übertragung.

4. Verfahren nach Anspruch 3, wobei das Verfahren ferner umfasst:
Auswählen, durch das Benutzergerät, einer zweiten CTU-Ressource aus den mehreren CTU-Ressourcen, wobei das Senden, durch das Benutzergerät, einer ersten Anforderungsnachricht an die Kernnetzwerkvorrichtung unter Verwendung der Zugriffsnetzwerkvorrichtung umfasst:
Zuordnen, durch das Benutzergerät, der ersten Anforderungsnachricht zur zweiten CTU-Ressource, die erste Anforderungsnachricht an die Zugriffsnetzwerkvorrichtung zu senden, sodass die Zugriffsnetzwerkvorrichtung die erste Anforderungsnachricht an die Kernnetzwerkvorrichtung sendet.

5. Verfahren nach einem der Ansprüche 2 bis 4, vor dem Senden, durch das Benutzergerät, einer ersten Anforderungsnachricht an die Kernnetzwerkvorrichtung unter Verwendung der Zugangsnetzwerkvorrichtung, ferner umfassend:
Empfangen, durch das Benutzergerät, einer Systeminformationsblock-(SIB)-Nachricht, die von der Zugangsnetzwerkvorrichtung per Broadcast übertragen wird, wobei die SIB-Nachricht einen öffentlichen Schlüssel umfasst, der von der Kernnetzwerkvorrichtung erzeugt wird; und
Verschlüsseln, durch das Benutzergerät, der ersten Anforderungsnachricht unter Verwendung des öffentlichen Schlüssels, wobei das Senden, durch das Benutzergerät, einer ersten Anforderungsnachricht an die Kernnetzwerkvorrichtung unter Verwendung der Zugangsnetzwerkvorrichtung umfasst:
Senden, durch das Benutzergerät, der verschlüsselten ersten Anforderungsnachricht an die Kernnetzwerkvorrichtung unter Verwendung der Zugangsnetzwerkvorrichtung.

6. Verfahren nach einem der Ansprüche 3 bis 4, ferner umfassend:
Empfangen, durch das Benutzergerät, von Kennzeichnungsinformationen der mehreren CTU-Ressourcen, die von der Zugriffsnetzwerkvorrichtung gesendet werden.

7. Verfahren nach einem der Ansprüche 1 bis 6, wobei das Verschlüsseln und Verkapseln, durch das Benutzergerät, von Daten unter Verwendung des Schlüssels und der Benutzergerätekennung umfasst:
Verschlüsseln und Verkapseln, durch das Benutzergerät, der Daten auf einer Transportanpassungsschicht des Benutzergeräts unter Verwendung des Schlüssels und der Benutzergerätekennung.

8. Verfahren zur unlizenzierten Übertragung, umfassend:
Empfangen (610), durch eine Zugangsnetzwerkvorrichtung, einer ersten Anforderungsnachricht von einem Benutzergerät, wobei die erste Anforderungsnachricht verwendet wird, um anzuzeigen, dass das Benutzergerät unlizenzierte Übertragung unterstützt, und um eine Kernnetzwerkvorrichtung aufzufordern, dem Benutzergerät eine Benutzergerätekennung und einen Schlüssel zuzuweisen, die für unlizenzierte Übertragung verwendet werden;
Senden (620), durch die Zugangsnetzwerkvorrichtung, der ersten Anforderungsnachricht an die Kernnetzwerkvorrichtung;
Empfangen (630), durch die Zugangsnetzwerkvorrichtung, einer ersten Antwortnachricht, die von der Kernnetzwerkvorrichtung gesendet wird, wobei die erste Antwortnachricht die Benutzergerätekennung und den Schlüssel enthält;
Senden (640), durch die Zugangsnetzwerkvorrichtung, der ersten Antwortnachricht an das Benutzergerät;
Empfangen (650), auf einer ersten konkurrierenden Übertragungseinheits-(CTU)-Ressource, in einem Modus für unlizenzierte Übertragung vom Benutzergerät, durch die Zugangsnetzwerkvorrichtung, von Daten, die vom Benutzergerät verschlüsselt und verkapselt wurden, unter Verwendung des Schlüssels und der Benutzergerätekennung; und
Senden (660), durch die Zugangsnetzwerkvorrichtung, der Daten an die Kernnetzwerkvorrichtung.

9. Verfahren nach Anspruch 8, wobei
das Empfangen, durch eine Zugangsnetzwerkvorrrichtung, einer ersten Anforderungsnachricht vom Benutzergerät umfasst:
Empfangen, durch die Zugangsnetzwerkvorrrichtung, der ersten Anforderungsnachricht, die vom Benutzergerät auf einer zweiten CTU-Ressource von mehreren CTU-Ressourcen übertragen wird.

10. Verfahren nach Anspruch 8 oder 9, ferner umfassend:
Empfangen, durch die Zugangsnetzwerkvorrrichtung, eines öffentlichen Schlüssels von der Kernnetzwerkvorrichtung; und Übertragen per Broadcast, durch die Zugangsnetzwerkvorrrichtung, des öffentlichen Schlüssels in einer Systeminformationsblock-(SIB)-Nachricht, wobei
das Senden, durch die Zugangsnetzwerkvorrrichtung, der ersten Anforderungsnachricht an die Kernnetzwerkvorrichtung umfasst:
Empfangen, durch die Zugangsnetzwerkvorrrichtung, der ersten Anforderungsnachricht, die vom Benutzergerät unter Verwendung des öffentlichen Schlüssels verschlüsselt wurde, und Senden der verschlüsselten ersten Anforderungsnachricht an die Kernnetzwerkvorrichtung; und
das Empfangen, durch die Zugangsnetzwerkvorrrichtung, einer ersten Antwortnachricht, die von der Kernnetzwerkvorrichtung gesendet wird, umfasst:
Empfangen, durch die Zugangsnetzwerkvorrrichtung, der ersten Antwortnachricht, die von der Kernnetzwerkvorrichtung unter Verwendung eines privaten Schlüssels verschlüsselt wurde.

11. Benutzergerät (1100), umfassend:
Abrufmodul (1110), das dafür ausgelegt ist, eine Benutzergerätekennung und einen Schlüssel abzurufen, die von einer Kernnetzwerkvorrichtung zugewiesen werden und die für unlizenzierte Übertragung verwendet werden;
Verschlüsselungsmodul (1120), das dafür ausgelegt ist, Daten unter Verwendung des Schlüssels zu verschlüsseln;
Verkapselungsmodul (1130), das dafür ausgelegt ist, die Daten unter Verwendung der Benutzergerätekennung zu verkapseln; und
Sendemodul (1140), das dafür ausgelegt ist, die verschlüsselten und verkapselten Daten an eine Zugriffsnetzwerkvorrichtung auf einer ersten konkurrierenden Übertragungseinheits-(CTU)-Ressource, in einem Modus für unlizenzierte Übertragung zu übertragen.

12. Benutzergerät nach Anspruch 11, wobei das Abrufmodul dafür ausgelegt ist, eine erste Anforderungsnachricht an die Kernnetzwerkvorrichtung unter Verwendung der Zugangsnetzwerkvorrichtung zu senden, wobei die erste Anforderungsnachricht verwendet wird, um anzuzeigen, dass das Benutzergerät unlizenzierte Übertragung unterstützt, und um die Kernnetzwerkvorrichtung aufzufordern, dem Benutzergerät die Benutzergerätekennung und den Schlüssel zuzuweisen, die für unlizenzierte Übertragung verwendet werden; und das Abrufmodul dafür ausgelegt ist, von der Zugangsnetzwerkvorrichtung eine erste Antwortnachricht zu empfangen, die von der Kernnetzwerkvorrichtung gesendet wird, wobei die erste Antwortnachricht die Benutzergerätekennung und den Schlüssel enthält.

13. Benutzergerät nach Anspruch 12, wobei das Sendemodul dafür ausgelegt ist, die erste CTU-Ressource aus mehreren CTU-Ressourcen auszuwählen und die verschlüsselten und gekapselten Daten der ersten CTU-Ressource zur Übertragung zuzuordnen.

14. Benutzergerät nach Anspruch 13, wobei das Sendemodul ferner dafür ausgelegt ist, eine zweite CTU-Ressource aus den mehreren CTU-Ressourcen auszuwählen und die erste Anforderungsnachricht der zweiten CTU-Ressource zum Senden der ersten Anforderungsnachricht an die Zugangsnetzwerkvorrichtung zuzuordnen.

15. Benutzergerät nach einem der Ansprüche 12 bis 14, wobei, bevor das Benutzergerät die erste Anforderungsnachricht an die Kernnetzwerkvorrichtung unter Verwendung der Zugangsnetzwerkvorrichtung sendet, das Abrufmodul ferner dafür ausgelegt ist, eine Systeminformationsblock-(SIB)-Nachricht zu empfangen, die von der Zugangsnetzwerkvorrichtung per Broadcast übertragen wird, wobei die SIB-Nachricht einen von der Kernnetzwerkvorrichtung erzeugten öffentlichen Schlüssel umfasst; das Verschlüsselungsmodul dafür ausgelegt ist, die erste Anforderungsnachricht unter Verwendung des öffentlichen Schlüssels zu verschlüsseln; und das Sendemodul dafür ausgelegt ist, die verschlüsselte erste Anforderungsnachricht an die Kernnetzwerkvorrichtung unter Verwendung der Zugangsnetzwerkvorrichtung zu senden.

16. Benutzergerät nach einem der Ansprüche 13 bis 14, wobei das Abrufmodul ferner dafür ausgelegt ist, von der Zugriffsnetzwerkvorrichtung gesendete Kennzeichnungsinformationen der mehreren CTU-Ressourcen zu empfangen.

17. Benutzergerät nach einem der Ansprüche 12 bis 16, wobei das Verschlüsselungsmodul dafür ausgelegt ist, die Daten auf einer Transportanpassungsschicht des Benutzergeräts unter Verwendung des Schlüssels zu verschlüsseln; und das Verkapselungsmodul dafür ausgelegt ist, die Daten auf der Transportanpassungsschicht des Benutzergeräts unter Verwendung der Benutzergerätekennung zu verkapseln.

## Revendications

1. Procédé pour une transmission sans licence consistant :
à obtenir (410), au moyen d'un équipement utilisateur, un identifiant d'équipement utilisateur et une clé qui sont attribués par un dispositif de réseau central et qui sont utilisés pour une transmission sans licence ;
à crypter et à encapsuler (420), au moyen de l'équipement d'utilisateur, des données en utilisant la clé et l'identifiant d'équipement utilisateur ; et
à transmettre (430), au moyen de l'équipement utilisateur, les données cryptées et encapsulées à un dispositif de réseau d'accès sur une première ressource d'unité de transmission par contention (CTU) dans un mode de transmission sans licence.

2. Procédé selon la revendication 1, dans lequel l'obtention, par un équipement utilisateur, d'un identifiant d'équipement utilisateur et d'une clé qui sont attribués par un dispositif de réseau central et qui sont utilisés pour une transmission sans licence, consiste :
à envoyer, au moyen de l'équipement utilisateur, un premier message de demande au dispositif de réseau central en utilisant le dispositif de réseau d'accès, dans lequel le premier message de demande est utilisé pour indiquer que l'équipement utilisateur prend en charge une transmission sans licence et pour demander au dispositif de réseau central d'attribuer, à l'équipement utilisateur, l'identifiant d'équipement utilisateur et la clé qui sont utilisés pour une transmission sans licence ; et
à recevoir, au moyen de l'équipement utilisateur en utilisant le dispositif de réseau d'accès, un premier message de réponse envoyé par le dispositif de réseau central, dans lequel le premier message de réponse comporte l'identifiant d'équipement utilisateur et la clé.

3. Procédé selon la revendication 2, dans lequel la transmission, par l'équipement utilisateur, des données cryptées et encapsulées à un dispositif de réseau d'accès sur une première ressource d'unité CTU dans un mode de transmission sans licence consiste :
à sélectionner, au moyen de l'équipement utilisateur, la première ressource d'unité CTU parmi de multiples ressources d'unité CTU et à mettre en correspondance les données cryptées et encapsulées avec la première ressource d'unité CTU pour une transmission.

4. Procédé selon la revendication 3, le procédé consistant en outre :
à sélectionner, au moyen de l'équipement utilisateur, une seconde ressource d'unité CTU parmi les multiples ressources d'unité CTU, dans lequel
l'envoi, par l'équipement utilisateur, d'un premier message de demande au dispositif de réseau central en utilisant le dispositif de réseau d'accès consiste :
à mettre en correspondance, au moyen de l'équipement utilisateur, le premier message de demande avec la seconde ressource d'unité CTU pour envoyer le premier message de demande au dispositif de réseau d'accès de telle sorte que le dispositif de réseau d'accès envoie le premier message de demande au dispositif de réseau central.

5. Procédé selon l'une quelconque des revendications 2 à 4, avant l'envoi, par l'équipement utilisateur, d'un premier message de demande au dispositif de réseau central en utilisant le dispositif de réseau d'accès, consistant en outre :
à recevoir, au moyen de l'équipement utilisateur, un message de bloc d'informations système (SIB) qui est diffusé par le dispositif de réseau d'accès, dans lequel le message de bloc SIB comprend une clé publique générée par le dispositif de réseau central ; et
à crypter, au moyen de l'équipement utilisateur, le premier message de demande en utilisant la clé publique, dans lequel
l'envoi, par l'équipement utilisateur, d'un premier message de demande au dispositif de réseau central en utilisant le dispositif de réseau d'accès consiste :
à envoyer, au moyen de l'équipement utilisateur, le premier message de demande crypté au dispositif de réseau central en utilisant le dispositif de réseau d'accès.

6. Procédé selon l'une quelconque des revendications 3 et 4, consistant en outre :
à recevoir, au moyen de l'équipement utilisateur, des informations d'indication des multiples ressources d'unité CTU qui sont envoyées par le dispositif de réseau d'accès.

7. Procédé selon l'une quelconque des revendications 1 à 6, dans lequel le cryptage et l'encapsulation, par l'équipement utilisateur, de données en utilisant la clé et l'identifiant d'équipement utilisateur consistent :
à crypter et à encapsuler, au moyen de l'équipement utilisateur, les données au niveau d'une couche d'adaptation de transport de l'équipement utilisateur en utilisant la clé et l'identifiant d'équipement utilisateur.

8. Procédé pour une transmission sans licence consistant :
à recevoir (610), au moyen d'un dispositif de réseau d'accès, un premier message de demande en provenance d'un équipement utilisateur, dans lequel le premier message de demande est utilisé pour indiquer que l'équipement utilisateur prend en charge une transmission sans licence et pour demander à un dispositif de réseau central d'attribuer, à l'équipement utilisateur, un identifiant d'équipement utilisateur et une clé qui sont utilisés pour une transmission sans licence ;
à envoyer (620), au moyen du dispositif de réseau d'accès, le premier message de réponse au dispositif de réseau central ;
à recevoir (630), au moyen du dispositif de réseau d'accès, un premier message de réponse envoyé par le dispositif de réseau central, dans lequel le premier message de réponse comporte l'identifiant d'équipement utilisateur et la clé ;
à envoyer (640), au moyen du dispositif de réseau d'accès, le premier message de réponse à l'équipement utilisateur ;
à recevoir (650), sur une première ressource d'unité de transmission par contention (CTU) dans un mode de transmission sans licence en provenance de l'équipement utilisateur, au moyen du dispositif de réseau d'accès, des données cryptées et encapsulées par l'équipement utilisateur à l'aide de la clé et de l'identifiant d'équipement utilisateur ; et
à envoyer (660), au moyen du dispositif de réseau d'accès, les données au dispositif de réseau central.

9. Procédé selon la revendication 8, dans lequel
la réception, par un dispositif de réseau d'accès, d'un premier message de demande en provenance de l'équipement utilisateur consiste :
à recevoir, au moyen du dispositif de réseau d'accès, le premier message de demande transmis par l'équipement utilisateur sur une seconde ressource d'unité CTU dans de multiples ressources d'unité CTU.

10. Procédé selon la revendication 8 ou 9, consistant en outre :
à recevoir, au moyen du dispositif de réseau d'accès, une clé publique en provenance du dispositif de réseau central ; et
à diffuser, au moyen du dispositif de réseau d'accès, la clé publique dans un message de bloc d'informations système (SIB), dans lequel
l'envoi, par le dispositif de réseau d'accès, du premier message de demande au dispositif de réseau central consiste :
à recevoir, au moyen du dispositif de réseau d'accès, le premier message de demande crypté par l'équipement utilisateur en utilisant la clé publique et à envoyer le premier message de demande crypté au dispositif de réseau central ; et
la réception, par le dispositif de réseau d'accès, d'un premier message de réponse envoyé par le dispositif de réseau central consistant :
à recevoir, au moyen du dispositif de réseau d'accès, le premier message de réponse crypté par le dispositif de réseau central en utilisant une clé privée.

11. Équipement utilisateur (1100) comprenant :
un module d'obtention (1110), configuré pour obtenir un identifiant d'équipement utilisateur et une clé qui sont attribués par un dispositif de réseau central et qui sont utilisés pour une transmission sans licence ;
un module de cryptage (1120), configuré pour crypter des données en utilisant la clé ;
un module d'encapsulation (1130), configuré pour encapsuler les données en utilisant l'identifiant d'équipement utilisateur ; et
un module d'envoi (1140), configuré pour transmettre les données cryptées et encapsulées à un dispositif de réseau d'accès sur une première ressource d'unité de transmission par contention (CTU) dans un mode de transmission sans licence.

12. Équipement utilisateur selon la revendication 11, dans lequel le module d'obtention est configuré pour envoyer un premier message de demande au dispositif de réseau central en utilisant le dispositif de réseau d'accès, dans lequel le premier message de demande est utilisé pour indiquer que l'équipement utilisateur prend en charge une transmission sans licence et pour demander au dispositif de réseau central d'attribuer, à l'équipement utilisateur, l'identifiant d'équipement utilisateur et la clé qui sont utilisés pour une transmission sans licence ; et le module d'obtention est configuré pour recevoir, du dispositif de réseau d'accès, un premier message de réponse envoyé par le dispositif de réseau central, dans lequel le premier message de réponse comporte l'identifiant d'équipement utilisateur et la clé.

13. Équipement utilisateur selon la revendication 12, dans lequel le module d'envoi est configuré pour sélectionner la première ressource d'unité CTU parmi de multiples ressources d'unité CTU et pour mettre en correspondance les données cryptées et encapsulées avec la première ressource d'unité CTU pour une transmission.

14. Équipement utilisateur selon la revendication 13, dans lequel le module d'envoi est en outre configuré pour sélectionner une seconde ressource d'unité CTU parmi les multiples ressources d'unité CTU et pour mettre en correspondance le premier message de demande avec la seconde ressource d'unité CTU pour envoyer le premier message de demande au dispositif de réseau d'accès.

15. Équipement utilisateur selon l'une quelconque des revendications 12 à 14, dans lequel, avant que l'équipement utilisateur n'envoie le premier message de demande au dispositif de réseau central en utilisant le dispositif de réseau d'accès, le module d'obtention est en outre configuré pour recevoir un message de bloc d'informations système (SIB) qui est diffusé par le dispositif de réseau d'accès, dans lequel le message de bloc SIB comprend une clé publique générée par le dispositif de réseau central ; le module de cryptage est configuré pour crypter le premier message de demande en utilisant la clé publique ; et le module d'envoi est configuré pour envoyer le premier message de demande crypté au dispositif de réseau central en utilisant le dispositif de réseau d'accès.

16. Équipement utilisateur selon l'une quelconque des revendications 13 et 14, dans lequel le module d'obtention est en outre configuré pour recevoir des informations d'indication des multiples ressources d'unité CTU qui sont envoyées par le dispositif de réseau d'accès.

17. Équipement utilisateur selon l'une quelconque des revendications 12 à 16, dans lequel le module de cryptage est configuré pour crypter les données au niveau d'une couche d'adaptation de transport de l'équipement utilisateur en utilisant la clé ; et le module d'encapsulation est configuré pour encapsuler les données au niveau de la couche d'adaptation de transport de l'équipement utilisateur en utilisant l'identifiant d'équipement utilisateur.
